(19) **Europäisches Patentamt / European Patent Office / Office européen des brevets**

(11) **EP 1 373 925 B1**

(12) **EUROPEAN PATENT SPECIFICATION**

(45) Date of publication and mention
of the grant of the patent:
**17.04.2013 Bulletin 2013/16**

(51) Int Cl.:
*G01S 13/32* (2006.01)          *G01S 13/58* (2006.01)
*G01S 13/87* (2006.01)

(21) Application number: **02708914.3**

(86) International application number:
**PCT/SE2002/000578**

(22) Date of filing: **22.03.2002**

(87) International publication number:
**WO 2002/086537 (31.10.2002 Gazette 2002/44)**

(54) **REMOTE DISTANCE MEASUREMENT BY MEANS OF A SUBSTANTIALLY REPETITIVE PROBING SIGNAL**

FERNABSTANDSMESSUNG MITTELS EINES SICH IM WESENTLICHEN WIEDERHOLENDEN SONDENSIGNALS

TELEMESURE A DISTANCE AU MOYEN D'UN SIGNAL DE VERIFICATION SENSIBLEMENT REPETITIF

(84) Designated Contracting States:
**AT BE CH CY DE DK ES FI FR GB GR IE IT LI LU MC NL PT SE TR**

(30) Priority: **02.04.2001   SE 0101174**
**12.04.2001   SE 0101320**

(43) Date of publication of application:
**02.01.2004   Bulletin 2004/01**

(73) Proprietor: **SAAB AB**
**581 88 Linköping (SE)**

(72) Inventor: **AXELSSON, Sune**
**S-589 43 Linköping (SE)**

(74) Representative: **Holmberg, Magnus et al**
**Zacco Sweden AB**
**Valhallavägen 117**
**Box 5581**
**114 85 Stockholm (SE)**

(56) References cited:
**US-A- 3 918 054     US-A- 4 360 812**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

THE BACKGROUND OF THE INVENTION AND PRIOR ART

The present invention relates generally to remote distance measurement by means of a received signal in a signal transceiver. Specifically, the invention relates to remote distance measurement of signal reflecting objects in relation to a signal transceiver by means of the method and signal transceiver according to the preambles of claims 1 and 19 respectively. The invention also relates to a digital group antenna system according to the preamble of claim 38.

Radar transceivers utilizing a deterministic radar signal have been known for a long time. The deterministic radar signal may for example be generated by means of linear frequency modulation (so-called chirp), continuous frequency modulation (FMCW = Frequency Modulation Continuous Wave) or a pseudo random code (e.g. Barker code). These signal types all share the feature of being predictable, i.e. their structure is repeated with a certain regularity.

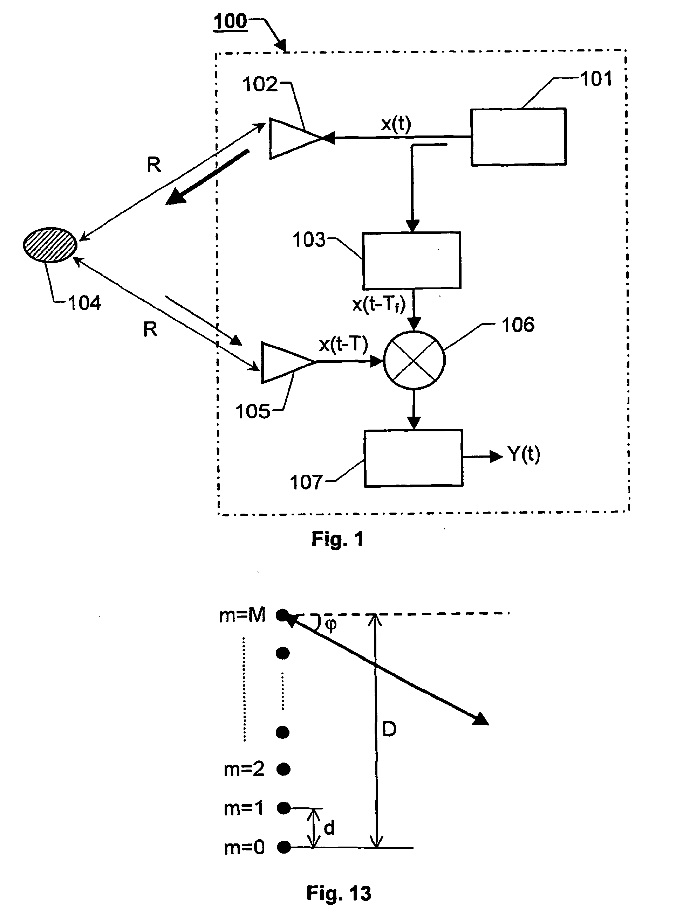

Figure 1 shows a block diagram over a per se known noise modulated radar transceiver 100. The following description of remote distance measurement with reference to figure 1 will pertain to a radar application, where a transmitted probing pulse is constituted by a radar signal, which propagates at the speed of light in the transmission medium in question. The remote distance measurement principle is, however, applicable also to other types of probing signals, such as sound waves. Naturally, these waves have a propagation speed which is considerably lower than for corresponding radar waves in all transmission media. Nevertheless, otherwise the conditions are in principle the same as in the radar case. Sound waves are advantageous as probing signals within many areas where radar signals are less suitable, for example in military- and civil sonar-/sodar-applications (for fish sweeping, mine sweeping and submarine sweeping) and in medical applications.

A noise generator 101 generates a deterministic signal x(t), which on one hand is fed to a delay element 103 in the form of a leak signal, and on the other hand is transmitted via a transmitter antenna 102 towards an object 104. The object 104 reflects a part of the radar signal x(t) against the radar transceiver 100, where a reflected radar signal x(t-T) is received via a receiver antenna 105. The reflected radar signal x(t-T) thus constitutes a delayed version of the transmitted radar signal x(t), where the delay is proportional to the distance R between the radar transceiver 100 and the object 104. A mixer 106 brings together the reflected radar signal x(t-T) and a reference signal x(t-$T_f$), which has passed through the delay element 103. The mixer 106 delivers a resulting signal to a lowpass filter 107. Given that the lowpass filter 107 has an impulse response h(t) the output signal Y(t) from the filter 107 may be described by the integral:

$$Y(t) = \int x(t - \tau - T)x(t - \tau - T_f)h(\tau)d\tau$$

where $T_f$ denotes the delay of the transmitted radar signal x(t), which the delay element 103 generates. The reflected radar signal's x(t-T) delay T in relation to the transmitted radar signal x(t) is T = 2R/c, where R = the distance between the radar transceiver 100 and the object 104 and c = the radar signal's propagation speed, which is equal to the speed of light in the transmission medium in question (for example vacuum, air, water or soil layer).

When the delay T of the reflected radar signal x(t-T) corresponds to the delay $T_f$ of the delay element 103 the mixer 106 generates a powerful correlation peak, which may be used for determining the distance R to the object 104. Provided that a so-called distance slot is established at a distance $R_0 = cT_f/2$ and the object moves through this distance slot $R_0$ (due to the fact that at least one of the object 104 and the transceiver 100 moves) the output signal from the mixer 106 describes a high resolution, and in relation to the radar transceiver 100 a radial, reproduction of the object 104. The distance resolution ΔR for this reproduction is given by the relationship ΔR = c/(2B), where B = the signal bandwidth of the waveform of the transmitted radar signal x(t) and c represents the radar signal's x(t) propagation speed in the transmission medium in question.

Via the output signal from the lowpass filter 107 it is then possible to determine the delay T of the reflected radar signal x(t-T) by performing a search by means of the delay element's 103 delay $T_f$ after the maximum value of the output signal Y(t). When this value of the delay element's 103 delay $T_f$ has been determined, the distance R to the object 104 may also be calculated according to R = cT/2.

However, the search for the maximum value of the output signal Y(t) involves an operation that is relatively intense in terms of calculation complexity, which either causes a comparatively long delay or demands a very powerful hardware. The solution becomes particularly processing intensive if also the relative velocity of the object 104 should be determined with a high accuracy.

SUMMARY OF THE INVENTION

The object of the present invention is to mitigate the above problems and present an efficient remote distance measurement solution for determining at least one of a distance and a relative velocity with respect to at least one reflecting object.

According to one aspect of the invention, this object is achieved by the initially described method for remote distance measurement of signal reflecting objects, which is characterized by adding a noise signal to one of a transmitted probing signal and a received information carrying signal. The secondary signal will thereby include a signal component based on the first signal as well as a signal component based on the noise signal. This in turn, results in that the signal processing of the primary signal and the secondary signal can be performed in manner being signal-wise advantageous, such that a high linearity can be obtained also by means of a very simple digitizing of the processed signals.

According to another aspect of the invention, this object is achieved by the initially described signal transceiver, which is characterized in that it includes an adding means for adding a noise signal to one of a transmitted probing signal and a received information carrying signal. Through the adding means it is ensured that the secondary signal includes a signal component based on the first signal as well as a signal component based on the noise component. The following signal processing can thereby be performed with a high linearity at the same time as a simple equipment can be utilized for digitizing the processed signals.

According to yet another aspect of the invention, this object is achieved by the initially described digital group antenna system, which is characterized in that the antenna aperture includes at least two antenna units which are connected to a respective proposed signal transceiver. Preferably, the antenna units are distributed evenly over the antenna aperture. The group antenna system also includes a lobe processor for receiving a distance signal and a velocity signal respectively from each of the signal transceivers. Based on these signals, the lobe processor generates combined pieces of velocity information and distance information plus angular information related to signal reflecting objects within the range of the system.

The invention results in that an efficient remote distance measurement can be accomplished with high precision in radar applications as well as in applications where acoustic probing signals are utilized, without requiring any extreme components for digitizing the received signals. On the contrary, very simple and robust A/D-converters can be used. Naturally, this is desirable, since the manufacturing cost for the remote distance equipment may thereby be maintained or be reduced at the same time as its performance and reliability are improved.

The hitherto known solutions for remote distance measurement by means of a noise modulated probing signal however require A/D-converters with 8 - 12 bits resolution, which are relatively expensive and complex because they must fulfill high demands in terms of speed and precision.

BRIEF DESCRIPTION OF THE DRAWINGS

The present invention is now to be explained more closely by means of preferred embodiments, which are disclosed as examples, and with reference to the attached drawings.

Figure 1     shows a block diagram over a per se known signal transceiver,

Figure 2     shows a general block diagram over a signal transceiver according to the invention,

Figure 3     shows a block diagram over a signal transceiver according to a first embodiment of the invention,

Figure 4     shows a block diagram over a signal transceiver according to a second embodiment of the invention,

Figure 5     shows a block diagram over a signal transceiver according to a third embodiment of the invention,

Figure 6     shows a block diagram over a signal transceiver according to a fourth embodiment of the invention,

Figure 7     shows a block diagram over a signal transceiver according to a fifth embodiment of the invention,

Figure 8     shows a block diagram over a signal transceiver according to a sixth embodiment of the invention,

Figure 9     shows a block diagram over a signal transceiver according to a seventh embodiment of the invention,

Figure 10    shows a block diagram over a signal transceiver according to a eighth embodiment of the invention,

Figure 11    shows a block diagram over a signal transceiver according to a ninth embodiment of the invention,

Figure 12    illustrates, by means of a flow diagram, the over all method according to the invention,

Figure 13    illustrates the principle for an antenna aperture in a digital group antenna system according to an embodiment of the invention, and

Figure 14    shows a block diagram over a digital group antenna system according to an embodiment of the invention.

## DESCRIPTION OF PREFERRED EMBODIMENTS OF THE INVENTION

It is desirable that the signal transmitted from a signal transceiver has a relatively high bandwidth, since this on one hand results in a comparatively low risk of the signal transceiver being revealed, and on the other hand provides a good distance resolution. The distance resolution $\Delta R$ namely depends on the bandwidth of the probing signal according to the relationship $\Delta R = c/(2B)$. It is further advantageous if the transmitted probing signal has a high average power level and that the measurement is extended in time, since this enables a high resolution doppler filtering and results in a good immunity to noise disturbances.

The distance resolution $\Delta R$ is alternatively also denoted distance slot in the literature.

If the signal transceiver has a low frequency range, i.e. if the spectrum of the noise signal includes the frequencies 0 Hz to B Hz, where B denotes the bandwidth, a conventional doppler frequency analysis cannot be performed. Namely, there is no pronounced carrier wave. Instead a correlation method is applied in respect of a received signal, which has been reflected against a moving target at a distance R and with a radial velocity v. Due to the relative radial target movement the received signal will either be compressed or expanded in time as $x[\alpha(t-T_0)]$, where $\alpha=(1-2v/c)$ and $T_0$ is the delay of the received information carrying signal in relation to the transmitted signal according to the relationship $T_0=2R/c$, where c is the probing signal's respective the information carrying signal's propagation speed and R is the distance to the moving target. During the following signal processing a received signal $x[\alpha(t-T_0)]$ is correlated with a reference signal $x[\alpha_r(t-T_r)]$, where $\alpha_r=(1-2v_r/c)$. The delay $T_r=2R_r/c$ and $\alpha_r$ are varied in order to determine the position of the correlation maximum value, which is defined as $\alpha_{r0}$ and $T_{r0}$. The target's radial velocity v and distance R can then be estimated from $v = c(1-\alpha_{r0})/2$ and $R = cT_{r0}/2$ respectively.

Even if the probing signal is modulated around a carrier wave at a particular frequency, in principle, the same method can be applied as for the low frequency range signal transceiver for detecting distance and velocity. Normally however, a frequency translation is performed in respect of the received signal before performing the correlation calculation.

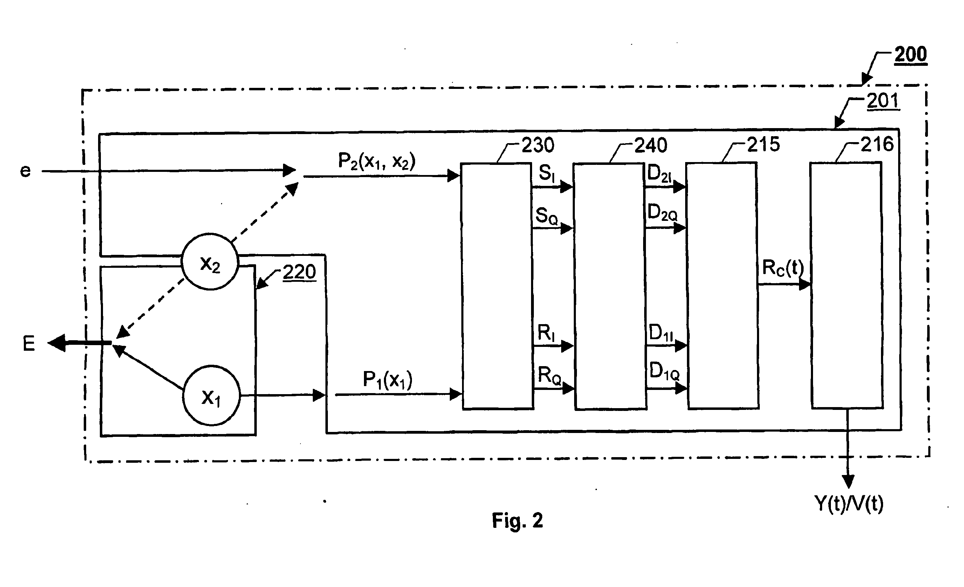

Figure 2 shows a general block diagram over a signal transceiver 200 according to the invention. The signal transceiver 200 includes a transmitter 220 and a receiver 201. The transmitter 220 includes a means for generating a first signal $x_1$, which is repeated with a certain regularity. According to a preferred embodiment of the invention the first signal $x_1$ is composed of a linear frequency sweep (so-called chirp). Preferably, the first signal $x_1$ may, however, also be composed of a continuously frequency modulated signal (FMCW), a step-frequency or a pseudo random coded signal.

A probing signal E transmitted from the transmitter 220 is based on at least the first signal $x_1$. The transmitted probing signal E is normally filtered and amplified in one or multiple stages. Furthermore, a signal component which is based on a noise component $x_2$ may be included in the transmitted probing signal E.

A transmitted probing signal E exclusively based on the first signal $x_1$ can be expressed as $x_1(t)\exp(j2\pi f_0 t)$ while a transmitted probing signal E based on the signal $x_1$ as well as the noise signal $x_2$ can be described by means of the expression $(x_1(t)+x_2(t))\exp(j2\pi f_0 t)$.

The transmitted probing signal E is presumed to be reflected by at least one signal reflecting object and be partly reflected to the signal transceiver 200 in the form of an information carrying signal e, which is received by the receiver 201. If at least one reflecting object moves relative the signal transceiver 200 the information carrying signal e also shows a doppler shift in relation to the transmitted probing signal E. Provided that no signal component based on the noise signal $x_2$ is included in the transmitted signal E, such a signal component is added to the received information carrying signal e in the receiver 201 before information pertaining to the reflected objects is derived from the information carrying signal e. Otherwise, the information carrying signal e is fed further to a subsequent signal processing without addition of any further noise.

In any case, the receiver 201 generates a primary signal $P_1(x_1)$ on basis of the first signal $x_1$ and a secondary signal $P_2(x_1, x_2)$ on basis of the information carrying signal e. The secondary signal $P_2(x_1, x_2)$ thus includes signal components which both originate from the first signal $x_1$ and from the noise signal $x_2$.

A demodulator 230 receives the primary signal $P_1(x_1)$ and generates on basis thereof at least one primary demodulated signal component $R_1$, $R_Q$. Correspondingly, the demodulator 230 receives the secondary signal $P_2(x_1, x_2)$ and generates in response thereto a secondary demodulated signal component $S_I$, $S_Q$. According to a preferred embodiment of the invention, the demodulator 230 includes a first quadrature demodulator, which produces two primary demodulated signal components in the form of quadrature signals $R_I$ and $R_Q$ respectively and a second quadrature demodulator, which produces two secondary demodulated signal components in the form of quadrature signals $S_I$ and $S_Q$ respectively.

A digitizing unit 240 receives the at least one primary demodulated signal component $R_I$, $R_Q$ and the at least one secondary demodulated signal component $S_I$, $S_Q$ and based thereon forms at least one digital primary signal component $D_{1I}$ $D_{1Q}$ respective at least one secondary digital signal component $D_{2I}$, $D_{2Q}$. According to a preferred embodiment of the invention, the digitizing unit 240 includes a sign detecting converter (i.e. a binary A/D-converter) for converting a respective demodulated signal component, thus in total four A/D-converters.

A correlator 215 receives the at least one primary digital signal component $D_{1I}$, $D_{1Q}$ and at least one secondary digital signal component $D_{2I}$, $D_{2Q}$. The correlator 215 correlates the at least one primary digital signal component $D_{1I}$, $D_{1Q}$ with the and at least one secondary digital signal component $D_{2I}$, $D_{2Q}$ and forms a resulting correlation signal $R_c$ (t), where $R_c(t)$ is the complex correlation function: $R_C(T,T_R) = R_r(T,T_R) + jR_i(T,T_R)$.

The correlation signal $R_c(T,T_R)$ is calculated by the correlator 215 according to the above for variable values of the delay $T_R$ of the reference signal, defining the distance slots $\Delta R$, and time samples of the correlation signals for the different $T_R$-values (the distance slots) are fed as input signals to a doppler processor 216. The doppler processor 216 performs, for each distance slot, a high resolution doppler filtering of the correlation signal $R_C(T_R,t)$, via for example a filter bank or FFT-processing, whereby distance information Y(t) as well as a radial velocity vector V(t) of the respective reflecting objects are determined. Distance- and velocity information pertaining to reflecting objects are preferably handled collectively via a so-called distance-/doppler-matrix Y(t)/V(t). The distance- and doppler filtering can thereby also be performed in a combined unit for distance determination and velocity determination instead of in separate units 215 and 216 respectively.

Doppler detection, of course, renders it possible to identify targets and other objects which move radially in relation to the remote distance measurement equipment. Furthermore, doppler detection can be used for suppressing noise when the equipment is mounted in a vessel, a craft or other mobile entity, such as a robot. Echoes with a doppler component substantially equal to the vessel's own velocity can hereby be suppressed as probable noise echoes, from the ground or other surface.

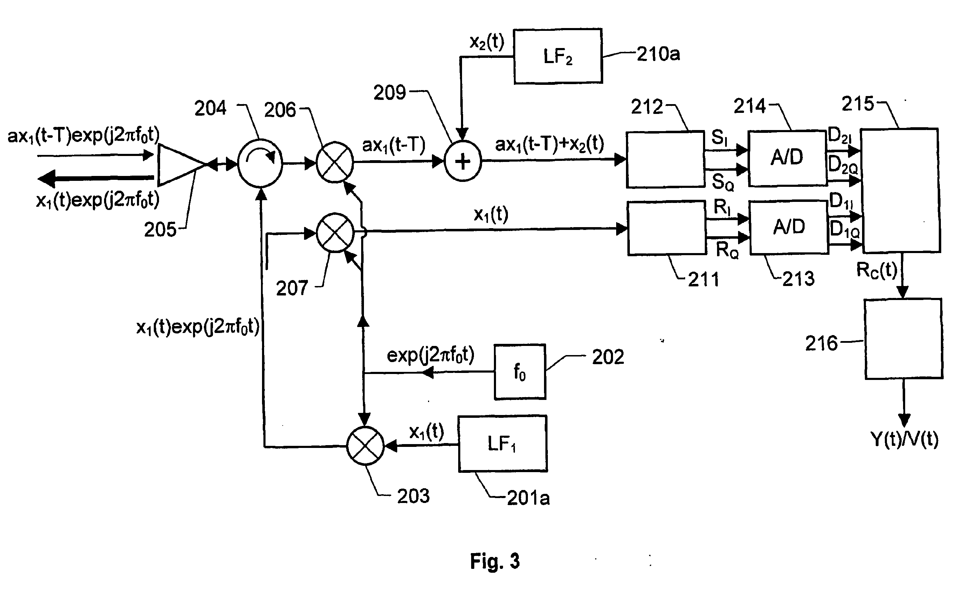

The figures 3 - 11 show different embodiments of signal transceivers for remote distance measurement according to the invention. The corresponding text below only explicitly refers to radar applications. However, the principles according to the respective embodiments are applicable also for other types of probing signals, such as sound waves. A sonar/sodar includes a vibrating element, which for example is electromechanically controlled by means of a piezoelectric transformer instead of a radar transmitter and an antenna. Either the same element is exploited both for transmitting and receiving the sound waves or separate elements may be employed. In both cases, the transmitter normally must be decoupled during reception, and vice versa, the receiver must be decoupled during transmission. The other parts of the signal transceiver may be the same independently of the type of probing signal employed. Naturally, the included components must be adapted to a relevant frequency range. A sonar/sodar normally operates within the frequency range 30 - 200 kHz while a radar generally utilizes signals within the frequency band 0,1 - 100 GHz.

Figure 3 shows a block diagram over a noise modulated radar transceiver according to a first embodiment of the invention, where a transmitted radar signal $x_1(t)\exp(j2\pi f_0 t)$ includes a first signal $x_1(t)$, which is repeated with a certain regularity. A comparatively low frequency first signal generator 201a here generates the first signal $x_1(t)$. A modulator (mixer) 203 receives, on one hand the first signal $x_1(t)$ and, on the other hand a high frequency signal $f_0$ from a local oscillator 202. The modulator 203 delivers an up-converted signal $x_1(t)\exp(j2\pi f_0 t)$ on its output. The up-converted signal $x_1(t)\exp(j2\pi f_0 t)$ is fed further via a directional coupler 204 to an antenna system 205, via which a corresponding radar signal $x_1(t)\exp(j2\pi f_0 t)$ is transmitted. Preferably, the transmission chain as well as the reception chain include amplifiers and filters that are adapted to the bandwidth of the signals, which however not are shown in the figure.

The transmitted radar signal $x_1(t)\exp(j2\pi f_0 t)$ is presumed to be reflected by at least one object and be partly reflected to the radar transceiver in the form of an information carrying signal $ax_1(t-T)\exp(j2\pi f_0 t)$ (where $a=a_0\exp(-j2\pi f_0 T)$), which is received by the antenna system 205. Provided that the reflecting object is moving in relation to the radar transceiver, T varies and a doppler shift occurs. After having passed the directional coupler 204 the signal is fed to a first down-converter 206. This frequency down transforms the information carrying signal $ax_1(t-T)\exp(j2\pi f_0 t)$ to a down-converted signal $ax_1(t-T)$ by mixing it with the output signal $f_0$ from the local oscillator 202.

A noise generator 210a generates a noise signal $x_2(t)$. An adder 209 receives the noise signal $x_2(t)$ and adds it to the down-converted signal $ax_1(t-T)$, whereby a summation signal $ax_1(t-T)+x_2(t)$ is formed (compare with $P_2(x_1, x_2)$ in figure 2).

A part of the transmitted radar signal $x_1(t)\exp(j2\pi f_0 t)$ is also returned as a leak signal to the receiver part of the transceiver. A second down-converter 207 receives this part of the transmitted radar signal $x_1(t)\exp(j2\pi f_0 t)$ and frequency transforms it down to a reference signal $x_1(t)$ (compare with $P_1(x_1)$ i figure 2).

A first quadrature modulator 211 receives the reference signal $x_1(t)$ and generates primary demodulated signal

components $R_1$ and $R_Q$ respectively. Correspondingly, a second demodulator 212 receives the summation signal $ax_1(t-T)+x_2(t)$ and generates, based thereon, secondary demodulated signal components $S_I$ and $S_Q$ respectively. The primary demodulated signal components $R_I$ and $R_Q$ are fed to a first A/D-converter 213, which converts them into a set of primary digital signal components $D_{1I}$ $D_{1Q}$ and the secondary demodulated signal components $S_I$ and $S_Q$ are fed to a second A/D-converter 214, which converts them into a set of secondary digital signal components $D_{2I}$, $D_{2Q}$.

The first and the second A/D-converters 213, 214 are preferably so-called few-bit A/D-converters, which means that they have comparatively few quantising levels (or a low resolution) at least with respect to the amplitude information in the primary signal $P_1(x_1)$ and the secondary signal $P_2(x_1, x_2)$ respectively. A few-bit A/D-converter according to the invention typically has 2 - 4 quantising levels and thus has a 1 - 2 bits resolution. According to a preferred embodiment of the invention, the A/D-converter only has one bit resolution, i.e. it is merely sign detecting.

A correlator 215 receives the primary digital signal components $D_{1I}$, $D_{1Q}$ and the secondary digital signal components $D_{2I}$, $D_{2Q}$, correlates them mutually with a variable delay $T_R$ and generates a correlation signal $R_C(T_R,t)$, where $R_C(T_R,t)$ is the complex correlation function. Every $T_R$-value thus corresponds to a distance slot. A subsequent doppler processor 216 processes time samples of the correlation signal $R_C(T_R,t)$ for all distance slots and produces a matrix whose complex figure elements represent reflected signal values from different distances and doppler frequencies. For example, by means of a threshold-procedure echoes of a certain minimum strength in respect of doppler and distance can be determined. From this information, in turn, distance information Y(t) and velocity information V(t) can be extracted for corresponding reflecting objects.

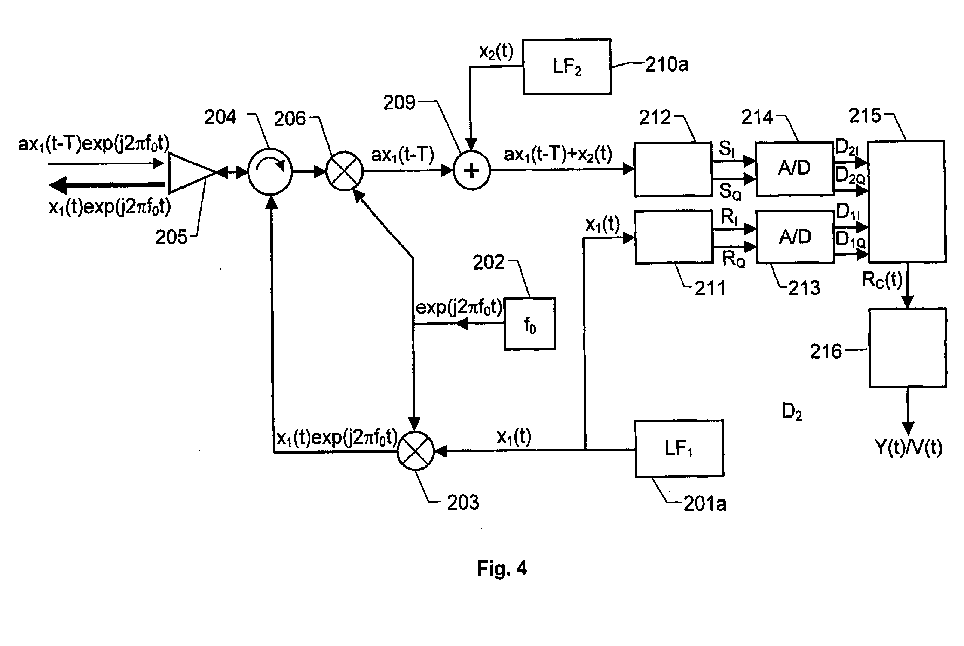

Figure 4 shows a block diagram over a radar transceiver according to a second embodiment of the invention, where a transmitted radar signal $x_1(t)exp(j2\pi f_0 t)$ includes a first signal $x_1(t)$, which is repeated with a certain regularity. A comparatively low frequency signal generator 201a generates the first signal $x_1(t)$. A modulator 203 receives, on one hand the first signal $x_1(t)$ and, on the other hand a high frequency signal $f_0$ from a local oscillator 202. The modulator 203 delivers an up-converted signal $x_1(t)exp(j2\pi f_0 t)$ on its output. The up-converted signal $x_1(t)exp(j2\pi f_0 t)$ is fed further via a directional coupler 204 to an antenna system 205, via which a corresponding radar signal $x_1(t)exp(j2\pi f_0 t)$ is transmitted. Preferably, the transmission chain as well as the reception chain include amplifiers and filters that are adapted to the bandwidth of the signals, which however not are shown in the figure.

The transmitted radar signal $x_1(t)exp(j2\pi f_0 t)$ is presumed to be reflected by at least one object and be partly reflected to the radar transceiver in the form of an information carrying signal $ax_1(t-T)exp(j2\pi f_0 t)$ (where $a=a_0 exp(-j2\pi f_0 T)$), which is received by the antenna system 205. Provided that the reflecting object is moving in relation to the radar transceiver, T varies and a doppler shift occurs. After having passed the directional coupler 204 the signal is fed to a first down-converter 206. This frequency down transforms the information carrying signal $ax_1(t-T)exp(j2\pi f_0 t)$ to a down-converted signal $ax_1(t-T)$ by mixing it with the output signal $f_0$ from the local oscillator 202.

A noise generator 210a generates a noise signal $x_2(t)$. An adder 209 receives the noise signal $x_2(t)$ and adds it to the down-converted signal $ax_1(t-T)$, whereby a summation signal $ax_1(t-T)+x_2(t)$ is formed (compare with $P_2(x_1, x_2)$ in figure 2). The first signal $x_1(t)$ is fed to the receiver part of the radar transceiver in the form of a reference signal $x_1(t)$ (compare with $P_1(x_1)$ in figure 2).

A first quadrature demodulator 211 receives the reference signal $x_1(t)$ and generates primary demodulated signal components $R_I$ and $R_Q$ respectively. Correspondingly, a second quadrature demodulator 212 receives the summation signal $ax_1(t-T)+x_2(t)$ and generates, based thereon, secondary demodulated signal components $S_I$ and $S_Q$ respectively. The primary demodulated signal components $R_I$ and $R_Q$ are fed to a first A/D-converter 213, which converts them to a set of primary digital signal components $D_{1I}$, $D_{IQ}$ and the secondary demodulated signal components $S_I$ and $S_Q$ are fed to a second A/D-converter 214, which converts them to a set of secondary digital signal components $D_{2I}$, $D_{2Q}$.

The first and the second A/D-converters 213, 214 are preferably so-called few-bit A/D-converters, which means that they have comparatively few quantising levels (or a low resolution) at least with respect to the amplitude information in the primary signal $P_1(x_1)$ and the secondary signal $P_2(x_1, x_2)$ respectively. A few-bit A/D-converter according to the invention typically has 2 - 4 quantising levels and thus has a 1 - 2 bits resolution. According to a preferred embodiment of the invention, the A/D-converter only has one bit resolution, i.e. it is merely sign detecting.

A correlator 215 receives the primary digital signal components $D_{1I}$, $D_{1Q}$ and the secondary digital signal components $D_{2I}$, $D_{2Q}$, correlates them mutually with a variable delay $T_R$ and generates a correlation signal $R_C(T_R,t)$, where $R_C(T_R,t)$ is the complex correlation function. Every $T_R$-value thus corresponds to a distance slot. A subsequent doppler processor 216 processes time samples of the correlation signal $R_c(T_R,t)$ for all distance slots and produces a matrix whose complex figure elements represent reflected signal values from different distances and doppler frequencies. For example, by means of a threshold-procedure echoes of a certain minimum strength in respect of doppler and distance can be determined. From this information, in turn, distance information Y(t) and velocity information V(t) can be extracted for corresponding reflecting objects.

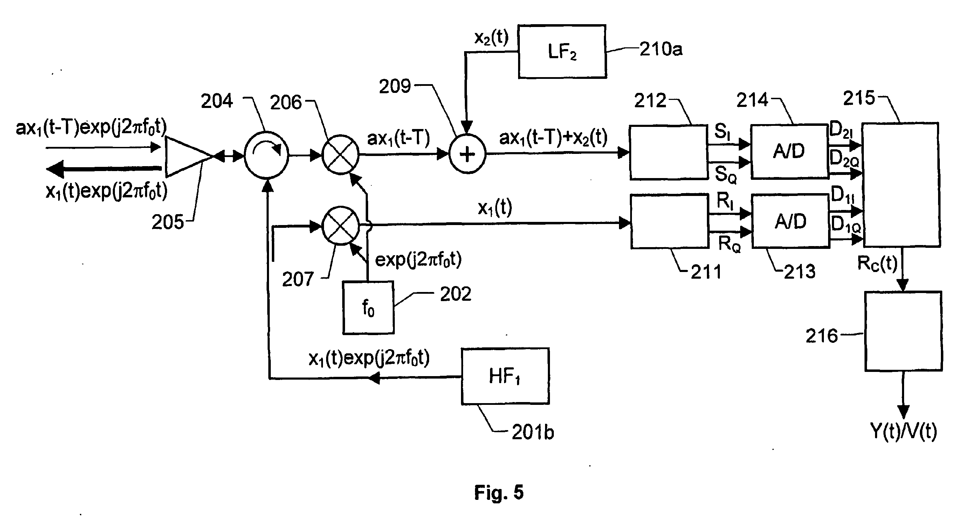

Figure 5 shows a block diagram over a radar transceiver according to a third embodiment of the invention. Here, a first signal $x_1(t)exp(j2\pi f_0 t)$ from a high frequency signal generator 201 b constitutes a direct basis for the transmitted radar signal. The signal $x_1(t)exp(j2\pi f_0 t)$ is repeated with a certain regularity. The signal $x_1(t)exp(j2\pi f_0 t)$ from the signal

generator 201 b is fed via a directional coupler 204 to an antenna system 205, via which a radar signal $x_1(t)\exp(j2\pi f_0 t)$ is transmitted. In similarity with the earlier described embodiment of the invention, it is presumed that the transmitted radar signal $x_1(t)\exp(j2\pi f_0 t)$ is reflected by at least one object and is partly reflected to the radar transceiver in the form of an information carrying signal $ax_1(t-T)\exp(j2\pi f_0 t)$, which is received by the antenna system 205. Preferably, the transmission chain as well as the reception chain include amplifiers and filters that are adapted to the bandwidth of the signals, which however not are shown in the figure.

The information carrying signal $ax_1(t-T)\exp(j2\pi f_0 t)$ is subsequently fed to a down converter 206. This frequency down transforms the information carrying signal $ax_1(t-T)\exp(j2\pi f_0 t)$ to a down converted signal $ax_1(t-T)$ by mixing it with the output signal $f_0$ from a local oscillator 202. A noise generator 210a generates a comparatively low frequency noise signal $x_2(t)$.

An adder 209 receives the noise signal $x_2(t)$ and adds it to the down converted signal $ax_1(t-T)$, whereby a summation signal $ax_1(t-T)+x_2(t)$ is formed (compare with $P_2(x_1, x_2)$ in figure 2). A fraction of the transmitted radar signal $x_1(t)\exp(j2\pi f_0 t)$ is also returned as a leak signal to the receiver part of the radar transceiver. A second down converter 207 receives this part of the transmitted radar signal $x_1(t)\exp(j2\pi f_0 t)$ and frequency transforms it down to a reference signal $x_1(t)$ (compare with $P_1(x_1)$ in figure 2).

A first quadrature demodulator 211 receives the reference signal $x_1(t)$ and generates primary demodulated signal components $R_I$ and $R_Q$ respectively. Correspondingly, a second quadrature demodulator 212 receives the summation signal $ax_1(t-T)+x_2(t)$ and generates, based thereon, secondary demodulated signal components $S_I$ and $S_Q$ respectively. The primary demodulated signal components $R_I$ and $R_Q$ are fed to a first A/D-converter 213, which converts them to a set of primary digital signal components $D_{1I}$, $D_{1Q}$ and the secondary demodulated signal components $S_I$ and $S_Q$ are fed to a second A/D-converter 214, which converts them to a set of secondary digital signal components $D_{2I}$, $D_{2Q}$.

A correlator 215 receives the primary digital signal components $D_{1I}$, $D_{1Q}$ and the secondary digital signal components $D_{2I}$, $D_{2Q}$, correlates them mutually with a variable delay $T_R$ and generates a correlation signal $R_C(T_R,t)$, where $R_C(T_R,t)$ is the complex correlation function. Every $T_R$-value thus corresponds to a distance slot. A subsequent doppler processor 216 processes time samples of the correlation signal $R_c(T_R,t)$ for all distance slots and produces a matrix whose complex figure elements represent reflected signal values from different distances and doppler frequencies. For example, by means of a threshold-procedure echoes of a certain minimum strength in respect of doppler and distance can be determined. From this information, in turn, distance information $Y(t)$ and velocity information $V(t)$ can be extracted for corresponding reflecting objects.

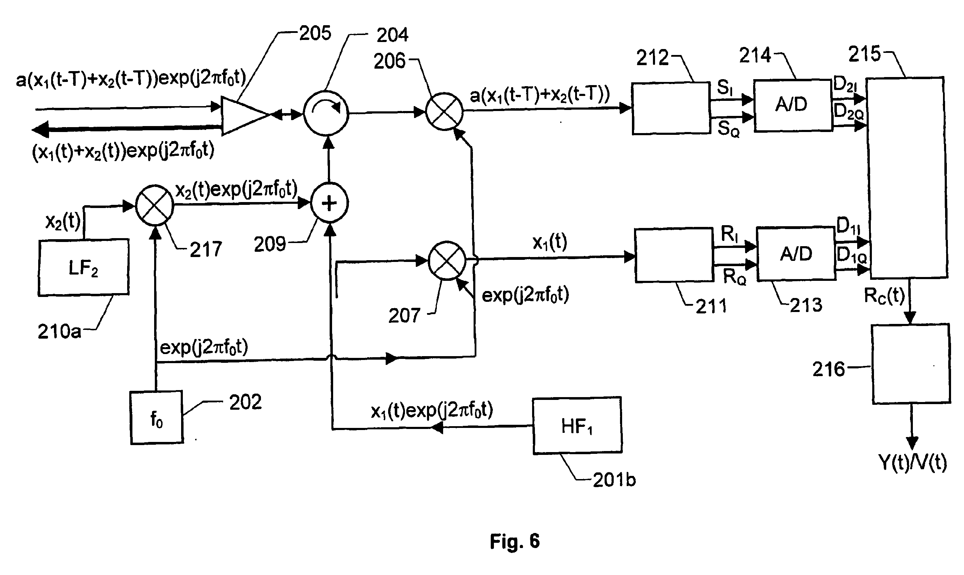

Figure 6 shows a block diagram over a radar transceiver according to a fourth embodiment of the invention. In similarity with the preceding embodiment, a first signal $x_1(t)\exp(j2\pi f_0 t)$ from a high frequency noise generator 201 b constitutes a basis for the transmitted radar signal. An adder 209, however, adds a second signal component $x_2(t)\exp(j2\pi f_0 t)$, which is based on a noise signal $x_2(t)$ from a noise generator 210a before the radar signal is transmitted. The noise generator 210a delivers the noise signal $x_2(t)$ to a modulator (mixer) 217, which likewise receives a high frequency periodic signal with a frequency $f_0$ from a local oscillator 202. A summation signal $(x_1(t)+x_2(t))\exp(j2\pi f_0 t)$ from the adder 209 is fed via a directional coupler 204 to an antenna system 205, via which subsequently a radar signal $(x_1(t)+x_2(t))\exp(j2\pi f_0 t)$ is transmitted. Preferably, the transmission chain as well as the reception chain include amplifiers and filters that are adapted to the bandwidth of the signals, which however not are shown in the figure.

In analogy with the earlier described embodiments of the invention, it is presumed that the transmitted radar signal $(x_1(t)+x_2(t))\exp(j2\pi f_0 t)$ is reflected by at least one object and is partly reflected to the radar transceiver in the form of an information carrying signal $a(x_1(t-T)+x_2(t-T))\exp(j2\pi f_0 t)$, which is received by the antenna system 205.

Thereafter, the information carrying signal $a(x_1(t-T)+x_2(t-T))\exp(j2\pi f_0 t)$ is fed to a down converter 206. This frequency down transforms down the information carrying signal $a(x_1(t-T)+x_2(t-T))\exp(j2\pi f_0 t)$ to a down converted signal $a(x_1(t-T)+x_2(t-T))$ (compare with $P_2(x_1, x_2)$ in figure 2) by mixing it with the output signal $f_0$ from a local oscillator 202. A signal component based on the first signal $x_1(t)\exp(j2\pi f_0 t)$ is returned as a leak signal to the receiver part of the radar transceiver. A second down converter receives this signal $x_1(t)\exp(j2\pi f_0 t)$ and frequency down converts it to a reference signal $x_1(t)$ (compare with $P_1(x_1)$ in figure 2)

A first quadrature demodulator 211 receives the reference signal $x_1(t)$ and generates primary demodulated signal components $R_I$ and $R_Q$ respectively. Correspondingly, a second quadrature demodulator 212 receives the summation signal $a(x_1(t-T)+x_2(t))$ and generates, based thereon, secondary demodulated signal components $S_I$ and $S_Q$ respectively. The primary demodulated signal components $R_I$ and $R_Q$ are fed to a first A/D-converter 213, which converts them to a set of primary digital signal components $D_{1I}$ $D_{1Q}$ and the secondary demodulated signal components $S_I$ and $S_Q$ are fed to a second A/D-converter 214, which converts them to a set of secondary digital signal components $D_{2I}$ $D_{2Q}$.

A correlator 215 receives the primary digital signal components $D_{1I}$, $D_{1Q}$ and the secondary digital signal components $D_{2I}$, $D_{2Q}$, correlates them mutually with a variable delay $T_R$ and generates a correlation signal $R_C(T_R,t)$, where $R_C(T_R,t)$ is the complex correlation function. Every $T_R$-value thus corresponds to a distance slot. A subsequent doppler processor 216 processes time samples of the correlation signal $R_C(T_R,t)$ for all distance slots and produces a matrix whose complex figure elements represent reflected signal values from different distances and doppler frequencies.

For example, by means of a threshold-procedure echoes of a certain minimum strength in respect of doppler and distance can be determined. From this information, in turn, distance information $Y(t)$ and velocity information $V(t)$ can be extracted for corresponding reflecting objects.

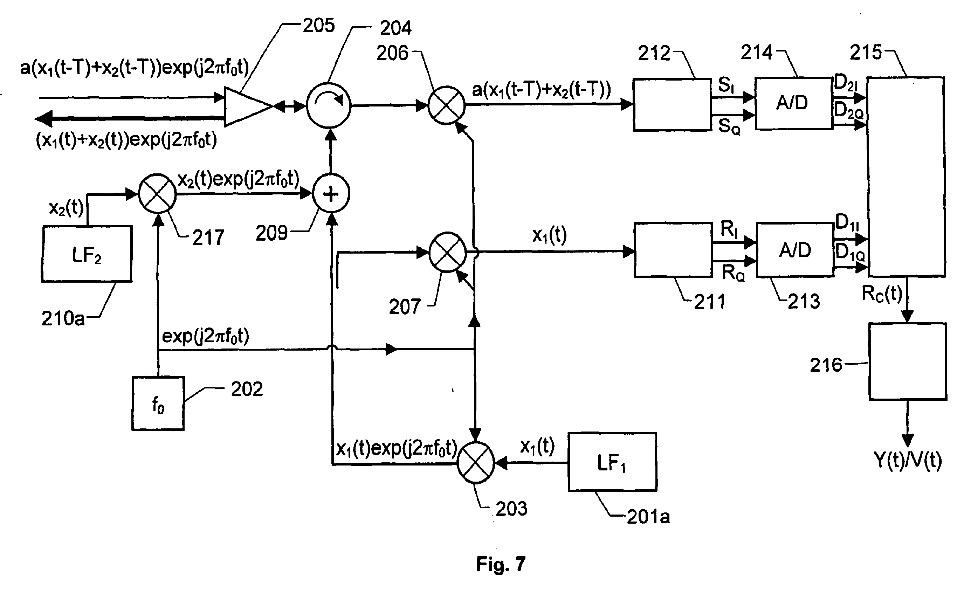

Figure 7 shows a block diagram over a radar transceiver according to a fifth embodiment of the invention. The transmitted radar signal on one hand includes a first signal component $x_1(t)\exp(j2\pi f_0 t)$ based on a first signal $x_1(t)$, which is repeated with a certain regularity, from a signal generator 201a, which is up-converted in a first modulator 203 by means of a high frequency periodic signal $f_0$ from a local oscillator 202, and on the other hand a second signal component $x_2(t)\exp(j2\pi f_0 t)$ based on a noise signal $x_2(t)$ from a noise generator 210a. A second modulator 217 receives the noise signal $x_2(t)$ and the high frequency periodic signal $f_0$ from the local oscillator 202 and sums the first signal component $x_1(t)\exp(2\pi f_0 t)$ together with the second signal component $x_2(t)\exp(j2\pi f_0 t)$ into a summation signal $(x_1(t)+x_2(t))\exp(j2\pi f_0 t)$, which is fed out via a directional coupler 204 and an antenna system 205 as a radar signal $(x_1(t)+x_2(t))\exp(j2\pi f_0 t)$. Preferably, the transmission chain as well as the reception chain include amplifiers and filters that are adapted to the bandwidth of the signals, which however not are shown in the figure.

In analogy with the earlier described embodiments of the invention, it is presumed that the transmitted radar signal $(x_1(t)+x_2(t))\exp(j2\pi f_0 t)$ is reflected by at least one object and is partly reflected to the radar transceiver in the form of an information carrying signal $a(x_1(t-T)+x_2(t-T))\exp(j2\pi f_0 t)$, which is received by the antenna system 205.

Thereafter, the information carrying signal $a(x_1(t-T)+x_2(t-T))\exp(j2\pi f_0 t)$ is fed to a down converter 206. This frequency down transforms the information carrying signal $a(x_1(t-T)+x_2(t-T))\exp(j2\pi f_0 t)$ to a down converted signal $a(x_1(t-T)+x_2(t-T))$ (compare with $P_2(x_1, x_2)$ in figure 2) by mixing it with the output signal $f_0$ from a local oscillator 202. A signal component based on the first signal $x_1(t)\exp(j2\pi f_0 t)$ is returned as a leak signal to the receiver part of the radar transceiver. A second down converter receives this signal $x_1(t)\exp(j2\pi f_0 t)$ and frequency down converts it to a reference signal $x_1(t)$ (compare with $P_1(x_1)$ in figure 2).

A first quadrature demodulator 211 receives the reference signal $x_1(t)$ and generates primary demodulated signal components $R_I$ and $R_Q$ respectively. Correspondingly, a second quadrature demodulator 212 receives the summation signal $ax_1(t-T)+x_2(t)$ and generates, based thereon, secondary demodulated signal components $S_I$ and $S_Q$ respectively. The primary demodulated signal components $R_I$ and $R_Q$ are fed to a first A/D-converter 213, which converts them to a set of primary digital signal components $D_{1I}$, $D_{1Q}$ and the secondary demodulated signal components $S_I$ and $S_Q$ are fed to a second A/D-converter 214, which converts them to a set of secondary digital signal components $D_{2I}$, $D_{2Q}$.

A correlator 215 receives the primary digital signal components $D_{1I}$, $D_{1Q}$ and the secondary digital signal components $D_{2I}$, $D_{2Q}$, correlates them mutually with a variable delay $T_R$ and generates a correlation signal $R_C(T_R,t)$, where $R_C(T_R,t)$ is the complex correlation function. Every $T_R$-value thus corresponds to a distance slot. A subsequent doppler processor 216 processes time samples of the correlation signal $R_c(T_R,t)$ for all distance slots and produces a matrix whose complex figure elements represent reflected signal values from different distances and doppler frequencies. For example, by means of a threshold-procedure echoes of a certain minimum strength in respect of doppler and distance can be determined. From this information, in turn, distance information $Y(t)$ and velocity information $V(t)$ can be extracted for corresponding reflecting objects.

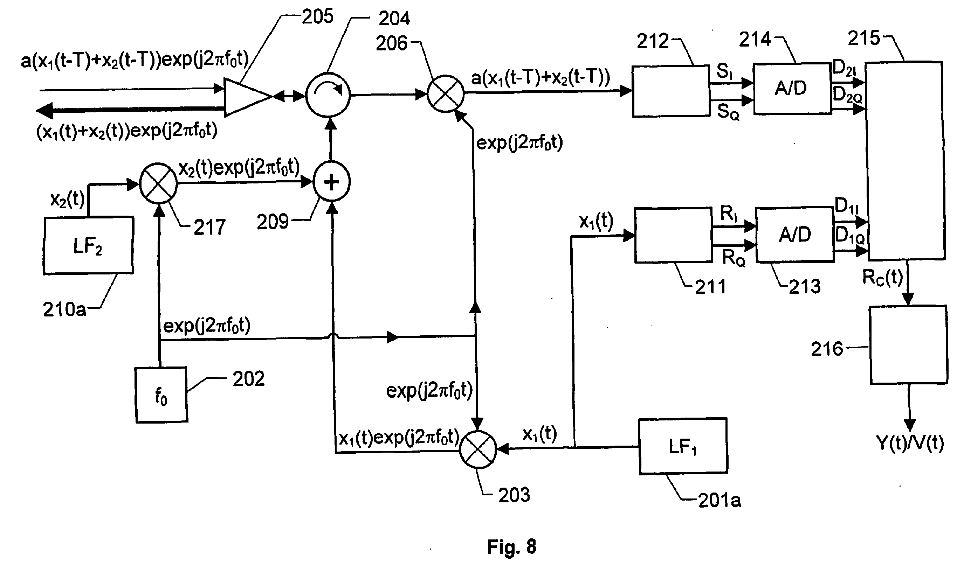

Figure 8 shows a block diagram over a radar transceiver according to a sixth embodiment of the invention. The transmitted radar signal on one hand includes a first signal component $x_1(t)\exp(j2\pi f_0 t)$ based on a signal $x_1(t)$, which is repeated with a certain regularity, from a signal generator 201a, which is up-converted in a first modulator 203 by means of a high frequency periodic signal $f_0$ from a local oscillator 202, and on the other hand a second signal component $x_2(t)\exp(j2\pi f_0 t)$ based on a noise signal $x_2(t)$ from a noise generator 210a. A modulator 217 receives the noise signal and the high frequency periodic signal $f_0$ from the local oscillator 202 and forms the second signal component $x_2(t)\exp(j2\pi f_0 t)$. An adder 209 sums the first signal $x_1(t)\exp(j2\pi f_0 t)$ and the signal component $x_2(t)\exp(j2\pi f_0 t)$ into a summation signal $(x_1(t)+x_2(t))\exp(j2\pi f_0 t)$, which is fed out via a directional coupler 204 and an antenna system 205 as a radar signal $(x_1(t)+x_2(t))\exp(j2\pi f_0 t)$. Preferably, the transmission chain as well as the reception chain include amplifiers and filters that are adapted to the bandwidth of the signals, which however not are shown in the figure.

It is also here presumed that the transmitted radar signal $(x_1(t)+x_2(t))\exp(j2\pi f_0 t)$ is reflected by at least one object and is partly reflected to the radar transceiver in the form of an information carrying signal $a(x_1(t-T)+x_2(t-T))\exp(j2\pi f_0 t)$, which is received by the antenna system 205.

Thereafter, the information carrying signal $a(x_1(t-T)+x_2(t-T))\exp(j2\pi f_0 t)$ is fed to a down converter 206. This frequency down transforms the information carrying signal $a(x_1(t-T)+x_2(t-T))\exp(j2\pi f_0 t)$ to a down converted signal $a(x_1(t-T)+x_2(t-T))$ (compare with $P_2(x_1, x_2)$ in figure 2) by mixing it with the output signal $f_0$ from a local oscillator 202. The first signal $x_1(t)$ is returned as a reference signal $x_1(t)$ directly from the signal generator 201 a to the receiver part of the radar transceiver (compare with $P_1(x_1)$ in figure 2).

A first quadrature demodulator 211 receives the reference signal $x_1(t)$ and generates primary demodulated signal components $R_I$ and $R_Q$ respectively. Correspondingly, a second quadrature demodulator 212 receives the summation signal $ax_1(t-T)+x_2(t)$ and generates, based thereon, secondary demodulated signal components $S_I$ and $S_Q$ respectively. The primary demodulated signal components $R_I$ and $R_Q$ are fed to a first A/D-converter 213, which converts them to a set of primary digital signal components $D_{1I}$, $D_{1Q}$ and the secondary demodulated signal components $S_I$ and $S_Q$ are fed to a second A/D-converter 214, which converts them to a set of secondary digital signal components $D_{2I}$, $D_{2Q}$.

A correlator 215 receives the primary digital signal components $D_{1I}$, $D_{1Q}$ and the secondary digital signal components $D_{2I}$, $D_{2Q}$, correlates them mutually with a variable delay $T_R$ and generates a correlation signal $R_C(T_R, t)$, where $R_C(T_R,t)$ is the complex correlation function. Every $T_R$-value thus corresponds to a distance slot. A subsequent doppler processor 216 processes time samples of the correlation signal $R_C(T_R,t)$ for all distance slots and produces a matrix whose complex figure elements represent reflected signal values from different distances and doppler frequencies. For example, by means of a threshold-procedure echoes of a certain minimum strength in respect of doppler and distance can be determined. From this information, in turn, distance information Y(t) and velocity information V(t) can be extracted for corresponding reflecting objects.

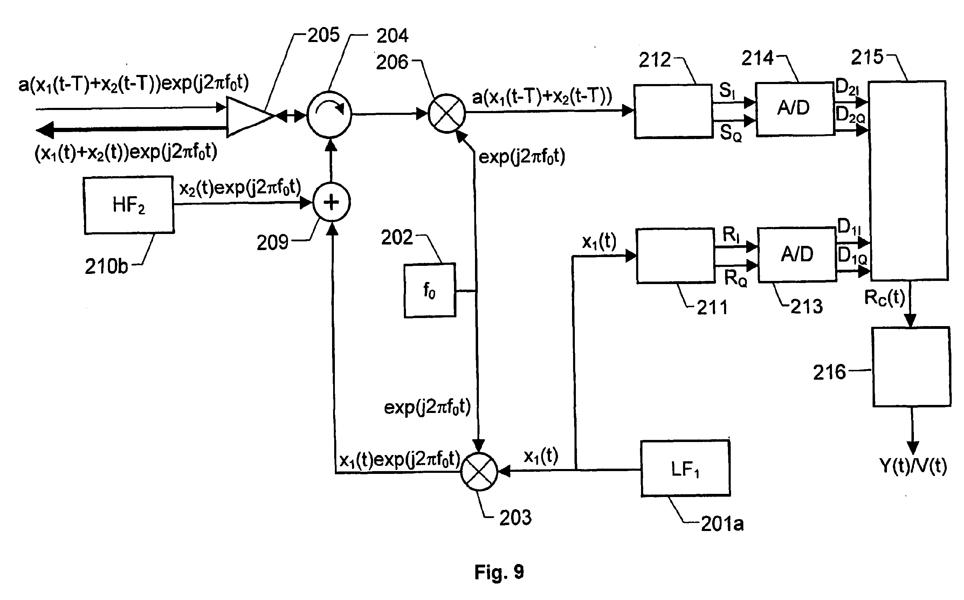

Figure 9 shows a block diagram over a radar transceiver according to a seventh embodiment of the invention. Also here, the transmitted radar signal on one hand includes a first signal component $x_1(t)\exp(j2\pi f_0 t)$, which is repeated with a certain regularity, and on the other hand a noise signal $x_2(t)\exp(j2\pi f_0 t)$.

A comparatively low frequency signal generator 201a delivers the first signal $x_1(t)$ to a modulator 203, which also receives a high frequency periodic signal at a frequency $f_0$ from a local oscillator 202. The modulator 203 forms, on basis thereof, the first signal component $x_1(t)\exp(j2\pi f_0 t)$. The noise signal $x_2(t)\exp(j2\pi f_0 t)$ is produced by a noise generator 201 b.

An adder 209 adds together the first signal component $x_1(t)\exp(j2\pi f_0 t)$ and the noise signal $x_2(t)\exp(j2\pi f_0 t)$ to a summation signal $(x_1(t)+x_2(t))\exp(j2\pi f_0 t)$, which is fed out via a directional coupler 204 and an antenna system 205 as a radar signal $(x_1(t)+x_2(t))\exp(j2\pi f_0 t)$. Preferably, the transmission chain as well as the reception chain include amplifiers and filters that are adapted to the bandwidth of the signals, which however not are shown in the figure.

It is also here presumed that the transmitted radar signal $(x_1(t)+x_2(t))\exp(j2\pi f_0 t)$ is reflected by at least one object and is partly reflected to the radar transceiver in the form of an information carrying signal $a(x_1(t-T)+x_2(t-T))\exp(j2\pi f_0 t)$, which is received by the antenna system 205.

Thereafter, the information carrying signal $a(x_1(t-T)+x_2(t-T))\exp(j2\pi f_0 t)$ is fed to a down converter 206. This frequency down transforms the information carrying signal $a(x_1(t-T)+x_2(t-T))\exp(j2\pi f_0 t)$ to a down converted signal $a(x_1(t-T)+x_2(t-T))$ (compare with $P_2(x_1, x_2)$ in figure 2) by mixing it with the output signal $f_0$ from the local oscillator 202. The first signal $x_1(t)$ is returned as a reference signal $x_1(t)$ directly from the first signal generator 201 a to the receiver part of the radar transceiver (compare with $P_1(x_1)$ in figure 2).

A first quadrature demodulator 211 receives the reference signal $x_1(t)$ and generates primary demodulated signal components $R_I$ and $R_Q$ respectively. Correspondingly, a second quadrature demodulator 212 receives the summation signal $ax_1(t-T)+x_2(t)$ and generates, based thereon, secondary demodulated signal components $S_I$ and $S_Q$ respectively. The primary demodulated signal components $R_I$ and $R_Q$ are fed to a first A/D-converter 213, which converts them to a set of primary digital signal components $D_{1I}$, $D_{1Q}$ and the secondary demodulated signal components $S_I$ and $S_Q$ are fed to a second A/D-converter 214, which converts them to a set of secondary digital signal components $D_{2I}$, $D_{2Q}$.

A correlator 215 receives the primary digital signal components $D_{1I}$, $D_{1Q}$ and the secondary digital signal components $D_{2I}$, $D_{2Q}$, correlates them mutually with a variable delay $T_R$ and generates a correlation signal $R_c(T_R,t)$, where $R_c(T_R,t)$ is the complex correlation function. Every $T_R$-value thus corresponds to a distance slot. A subsequent doppler processor 216 processes time samples of the correlation signal $R_c(T_R,t)$ for all distance slots and produces a matrix whose complex figure elements represent reflected signal values from different distances and doppler frequencies. For example, by means of a threshold-procedure echoes of a certain minimum strength in respect of doppler and distance can be determined. From this information, in turn, distance information Y(t) and velocity information V(t) can be extracted for corresponding reflecting objects.

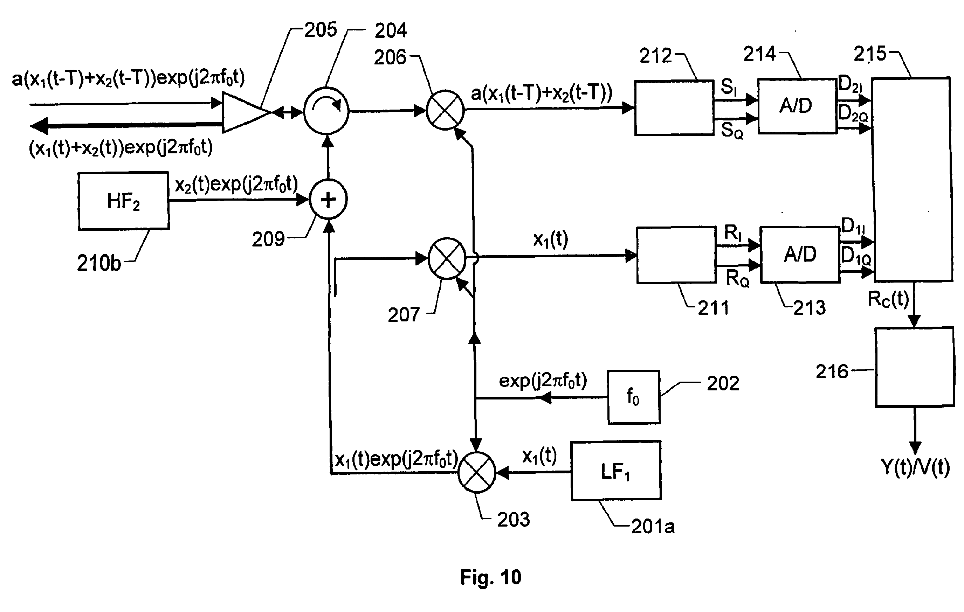

Figure 10 shows a block diagram over a radar transceiver according to an eighth embodiment of the invention. The transmitted radar signal includes a first signal component $x_1(t)\exp(j2\pi f_0 t)$, which is repeated with a certain regularity and a noise signal $x_2(t)\exp(j2\pi f_0 t)$.

A comparatively low frequency signal generator 201a delivers the first signal $x_1(t)$ to a modulator 203, which also receives a high frequency periodic signal at a frequency $f_0$ from a local oscillator 202. The modulator 203 forms, on basis thereof, the first signal component $x_1(t)\exp(j2\pi f_0 t)$. The noise signal $x_2(t)\exp(j2\pi f_0 t)$ is produced by a comparatively high frequency noise generator 210b.

An adder 209 adds together the first signal component $x_1(t)\exp(j2\pi f_0 t)$ and the noise signal $x_2(t)\exp(j2\pi f_0 t)$ to a summation signal $(x_1(t)+x_2(t))\exp(j2\pi f_0 t)$, which is fed out via a directional coupler 204 and an antenna system 205 as a radar signal $(x_1(t)+x_2(t))\exp(j2\pi f_0 t)$. Preferably, the transmission chain as well as the reception chain include amplifiers and filters that are adapted to the bandwidth of the signals, which however not are shown in the figure.

The transmitted radar signal $(x_1(t)+x_2(t))\exp(j2\pi f_0 t)$ is presumed to be reflected by at least one object and is partly reflected to the radar transceiver in the form of an information carrying signal $a(x_1(t-T)+x_2(t-T))\exp(j2\pi f_0 t)$, which is received by the antenna system 205.

Thereafter, the information carrying signal $a(x_1(t-T)+x_2(t-T))\exp(j2\pi f_0 t)$ is fed to a down converter 206. This frequency down transforms the information carrying signal $a(x_1(t-T)+x_2(t-T))\exp(j2\pi f_0 t)$ to a down converted signal $a(x_1(t-T)+x_2(t-T))$ (compare with $P_2(x_1, x_2)$ in figure 2) by mixing it with the output signal $f_0$ from a local oscillator 202. The first signal $x_1(t)$ is returned as a leak signal to the receiver part of the radar transceiver. A second down converter 207 receives this signal $x_1(t)\exp(j2\pi f_0 t)$ and frequency down transforms it into a reference signal $x_1(t)$ (compare with $P_1(x_1)$ in figure 2).

A first quadrature demodulator 211 receives the reference signal $x_1(t)$ and generates primary demodulated signal components $R_I$ and $R_Q$ respectively. Correspondingly, a second quadrature demodulator 212 receives the summation signal $ax_1(t-T)+x_2(t)$ and generates, based thereon, secondary demodulated signal components $S_I$ and $S_Q$ respectively. The primary demodulated signal components $R_I$ and $R_Q$ are fed to a first A/D-converter 213, which converts them to a set of primary digital signal components $D_{1I}, D_{1Q}$ and the secondary demodulated signal components $S_I$ and $S_Q$ are fed to a second A/D-converter 214, which converts them to a set of secondary digital signal components $D_{2I}, D_{2Q}$.

A correlator 215 receives the primary digital signal components $D_{1I}, D_{1Q}$ and the secondary digital signal components $D_{2I}, D_{2Q}$, correlates them mutually with a variable delay $T_R$ and generates a correlation signal $R_C(T_R,t)$, where $R_c(T_R,t)$ is the complex correlation function. Every $T_R$-value thus corresponds to a distance slot. A subsequent doppler processor 216 processes time samples of the correlation signal $R_c(T_R,t)$ for all distance slots and produces a matrix whose complex figure elements represent reflected signal values from different distances and doppler frequencies. For example, by means of a threshold-procedure echoes of a certain minimum strength in respect of doppler and distance can be determined. From this information, in turn, distance information $Y(t)$ and velocity information $V(t)$ can be extracted for corresponding reflecting objects.

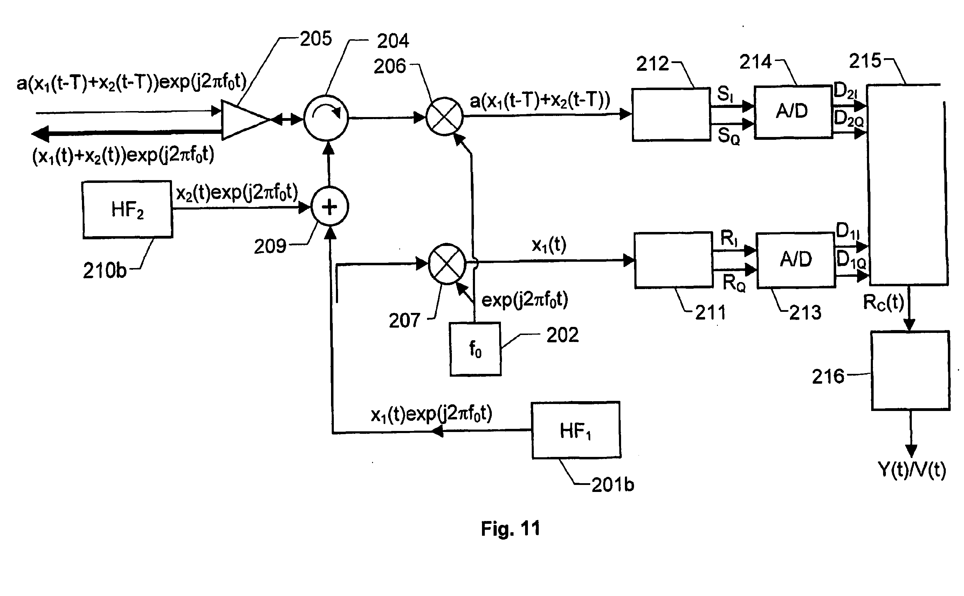

Figure 11 shows a block diagram over a radar transceiver according to a ninth embodiment of the invention. The transmitted radar signal includes a first signal $x_1(t)\exp(j2\pi f_0 t)$, which is repeated with a certain regularity and a noise signal $x_2(t)\exp(j2\pi f_0 t)$.

A comparatively high frequency signal generator 201a delivers the first signal $x_1(t)\exp(j2\pi f_0 t)$ to an adder 209. The adder 209 also receives the noise signal $x_2(t)\exp(j2\pi f_0 t)$ from a comparatively high frequency noise generator 210b. The adder 209 adds together the first noise signal $x_1(t)\exp(j2\pi f_0 t)$ and the second noise signal $x_2(t)\exp(j2\pi f_0 t)$ to a summation signal $(x_1(t)+x_2(t))\exp(j2\pi f_0 t)$, which is fed out via a directional coupler 204 and an antenna system 205 as a radar signal $(x_1(t)+x_2(t))\exp(j2\pi f_0 t)$. Preferably, the transmission chain as well as the reception chain include amplifiers and filters that are adapted to the bandwidth of the signals, which however not are shown in the figure.

The transmitted radar signal $(x_1(t)+x_2(t))\exp(j2\pi f_0 t)$ is presumed to be reflected by at least one object and is partly reflected to the radar transceiver in the form of an information carrying signal $a(x_1(t-T)+x_2(t-T))\exp(j2\pi f_0 t)$, which is received by the antenna system 205.

Thereafter, the information carrying signal $a(x_1(t-T)+x_2(t-T))\exp(j2\pi f_0 t)$ is fed to a down converter 206. This frequency down transforms the information carrying signal $a(x_1(t-T)+x_2(t-T))\exp(j2\pi f_0 t)$ to a down converted signal $a(x_1(t-T)+x_2(t-T))$ (compare with $P_2(x_1, x_2)$ in figure 2) by mixing it with the output signal $f_0$ from the local oscillator 202. The first signal $x_1(t)$ is returned as a leak signal to the receiver part of the radar transceiver. A second down converter 207 receives this signal $x_1(t)\exp(j2\pi f_0 t)$ and frequency down converts it into a reference signal $x_1(t)$ (compare with $P_1(x_1)$ in figure 2).

A first quadrature demodulator 211 receives the reference signal $x_1(t)$ and generates primary demodulated signal components $R_I$ and $R_Q$ respectively. Correspondingly, a second quadrature demodulator 212 receives the summation signal $a(x_1(t-T)+x_2(t))$ and generates, based thereon, secondary demodulated signal components $S_1$ and $S_Q$ respectively. The primary demodulated signal components $R_I$ and $R_Q$ are fed to a first A/D-converter 213, which converts them to a set of primary digital signal components $D_{1I} D_{1Q}$ and the secondary demodulated signal components $S_I$ and $S_Q$ are fed to a second A/D-converter 214, which converts them to a set of secondary digital signal components $D_{2I}, D_{2Q}$.

A correlator 215 receives the primary digital signal components $D_{1I}, D_{1Q}$ and the secondary digital signal components $D_{2I}, D_{2Q}$, correlates them mutually with a variable delay $T_R$ and generates a correlation signal $R_c(T_R,t)$, where $R_c(T_R,t)$ is the complex correlation function. Every $T_R$-value thus corresponds to a distance slot. A subsequent doppler processor 216 processes time samples of the correlation signal $R_c(T_R,t)$ for all distance slots and produces a matrix whose complex figure elements represent reflected signal values from different distances and doppler frequencies. For example, by means of a threshold-procedure echoes of a certain minimum strength in respect of doppler and distance can be determined. From this information, in turn, distance information $Y(t)$ and velocity information $V(t)$ can be extracted for corresponding reflecting objects.

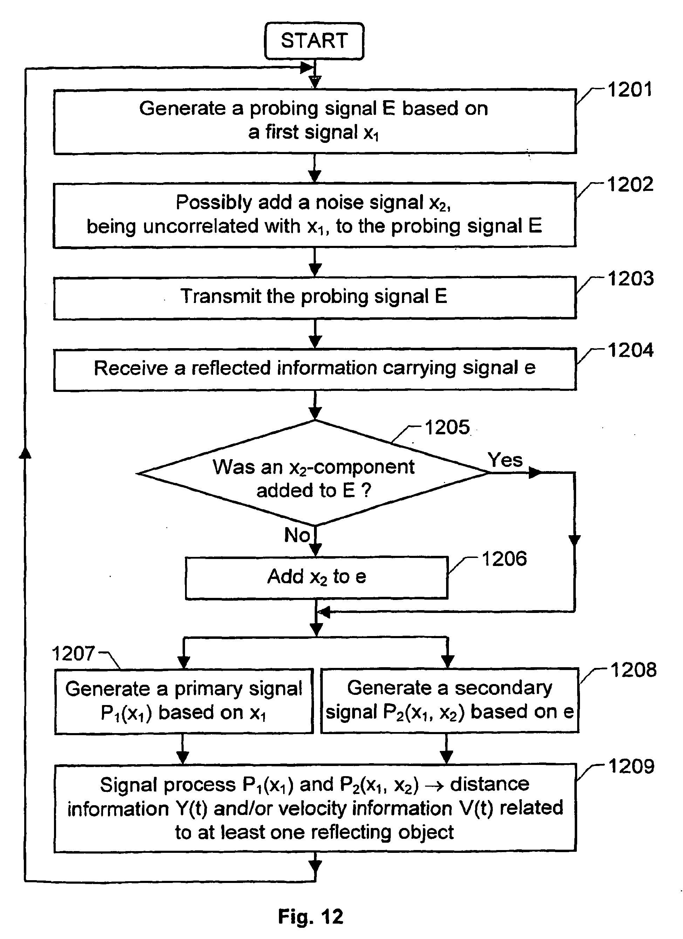

A flow diagram is found in figure 12, which illustrates the overall method according to the invention. A first step 1201 generates a probing signal, which at least is based on a first signal $x_1$. In a subsequent step 1202 a noise signal $x_2$ is possibly added as an additional component in the probing signal. Thereafter, a step 1203 transmits the radar signal.

An information carrying signal having been reflected against at least one reflecting object is received in a following step 1204. A step 1205 then investigates whether a noise signal $x_2$ was added to the probing signal in step 1203. If this was the case, the procedure continues directly in parallel steps 1207 and 1208. Otherwise, the noise signal $x_2$ is added to the information carrying signal in a step 1206.

Then, the step 1207 generates a primary signal based on the first signal $x_1$. In parallel therewith, the step 1208 generates a secondary signal based on the information carrying signal, which thus comprises a signal component including the first signal $x_1$ as well as a signal component including the noise signal $x_2$. A final step 1209 signal processes the primary and the secondary signals, whereby at least one of distance information and velocity information pertaining to the reflecting object is generated.

It should be noted that although the steps according to the flow diagram in figure 12 are performed sequentially, this is only true with regard to infinitesimal segments of the relevant signals. Namely, while for example a particular segment of the probing signal is transmitted, an earlier transmitted and received segment of the same signal is processed, and so on.

The invention may preferably be applied at remote distance measurement by means of a digital group antenna system. The digital group antenna system may utilize probing signals of radar type as well as sonar type. Reconnaissance radar systems, fire-control radar systems, target seeker systems, proximity fuses and altimeters constitute further application examples of the invention. The latter may, in turn, include one or more digital group antenna systems.

According to the invention, lobe shaping and lobe control are synthesized via the output signals from two or more correlators 215. The doppler correlation function for narrow band noise based on a single noise signal $x_1$ and one reflecting object is, after sign detection, described by the equations (I) and (Q) above. As mentioned earlier, it is from these equations then possible to define the correlation function according to:

$$R_C(T,T_R) = R_r(T,T_R) + jR_i(T,T_R).$$

If $\rho(T-T_R)$ in the equations (I) and (Q) is reduced, as is proposed according to the invention, by adding a second noise signal $x_2$, which is uncorrelated with the first noise signal $x_1$, such that $\arcsin(x) \approx x$, the following approximation is true:

$$R_C(T,T_R) \approx A\rho(T-T_R)\exp[j\omega_0(T-T_R)]$$

where the phase term's linear variation in time via T defines the doppler frequency and where $\rho(T-T_R)$ has its correlation maximum where $T_R \approx T$.

If two or more antenna units (m=0,..., m=M) in a line array according to figure 13 are used jointly to transmit probing signals and to receive information carrying signals, where the antenna units are positioned at mutually equidistant distances d, a delay T from a first antenna unit m = 0 will vary in relation to the other antenna units m = 1 to m = M (where a maximum distance D = M·d) the correlation function can be written:

$$R_C(m,T,T_R) \approx A\rho(T-T_R)\exp[j\omega_0(T_m-T_R)],$$

which, due to the geometry, also can be expressed:

$$R_C(m,T,T_R) \approx A\rho(T-T_R)\exp[j\omega_0(T_0-T_R)+j\delta_m],$$

where $\delta_m = 4\pi dm\sin(\varphi)/\lambda$
$\varphi$ = the probing signal's direction in relation to a vertical reference direction from the line array, and
$\lambda$ = the probing signal's wavelength

In course of the lobe synthesizing, an amplification is obtained in the direction $\varphi$ by multiplying the output signals after the correlation calculation with the complex number $\exp[-j\delta_m]$ and adding the respective correlation signal (from m=0 to m=M), i.e.:

$$R_C(\varphi,T,T_R) = \sum R_C(m,T,T_R)\exp[-j4\pi dm\sin(\varphi)/\lambda],$$

which in turn can be reformulated with $\Delta\delta = 4\pi d\sin(\varphi)/\lambda$ as:

$$R_C(\varphi,T,T_R) = \sum R_C(m,T,T_R)\exp[-jm\Delta\delta]$$

If the representation $\varphi_n = n\Delta\varphi$ for n=0, 1,..., M is used, the following becomes true: $\Delta\delta = 4\pi d\sin(n\Delta\varphi(p)/\lambda$, which whenever $n\Delta\varphi<1$, may be approximated with $\Delta\delta = 4\pi dn\Delta\varphi/\lambda$. For $d=\lambda/2$, $\Delta\delta = 2\pi n\Delta\varphi$. Entry into the correlation sum above gives:

$$R_C(n\Delta\varphi,T,T_R) \approx \sum R_C(m,T,T_R)\exp[-j2\pi nm\Delta\varphi]$$

from which it is apparent that a number M sub-lobes can be generated by means of FFT of a vector $\{R_c(m,T,T_R)\}$, where m={0, 1,... , M}. Correspondingly, sub-lobes may be generated from a rectangular antenna array (with equidistant positioning of the antenna units) by means of a two dimensional Fourier transform. A circular geometry or curved antenna apertures require special algorithms which are described in the antenna synthesis theory.

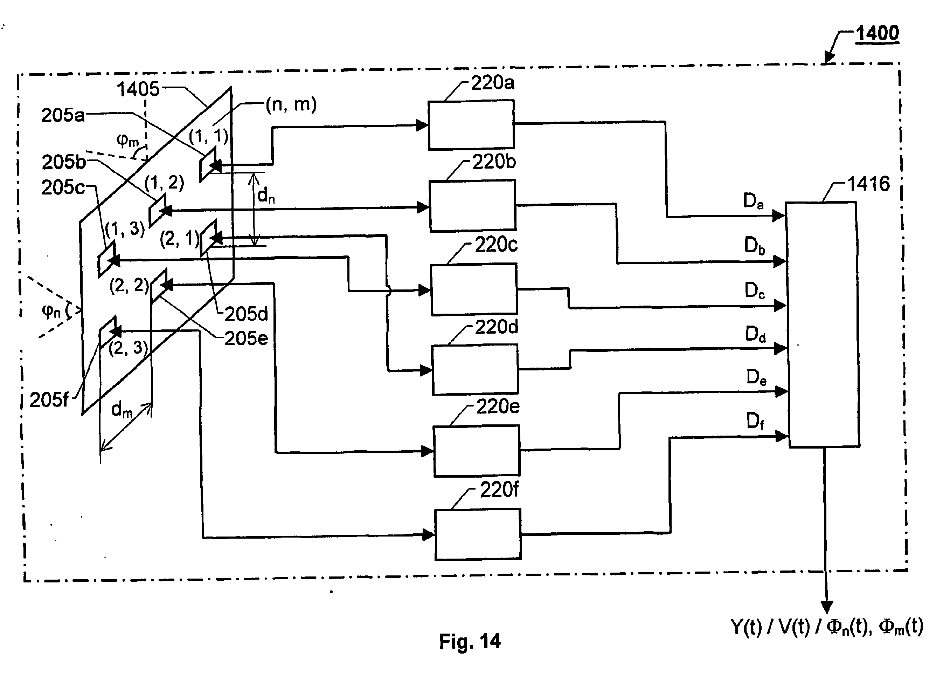

Figure 14 shows a block diagram over a digital group antenna system 1400 according to an embodiment of the invention. The group antenna system 1400 includes an antenna aperture 1405 over which six antenna units 205a - 205f are distributed according to a check pattern at horizontal m and vertical n mutually equidistant distances $d_m$; $d_n$ from each other.

A respective signal transceiver 220a - 220f transmits probing signals and receives information carrying signals via the antenna units 205a - 205f. The signal transceivers 220a - 220f each delivers data $D_a$ - $D_f$ after correlation forming and doppler processing to a common lobe processor 1416, which on basis of this data $D_a$ - $D_f$ produces distance information Y(t), velocity information V(t) and angular information in horizontal direction $\Phi_m(t)$ and vertical direction $\Phi_n$(t) respectively related to signal reflecting objects within the range of the digital group antenna system 1400.

Naturally, the group antenna system 1400 may be realized by means of alternative embodiments. These are, however, not illustrated by means of any figures, but are described in short below.

Generally, the group antenna radar system 1400 includes processors for distance determination in a number of distance slots (by means of a step-wise correlation procedure), velocity determination (by means of doppler filtering or FFT) and determination of angular positions of reflecting objects (by utilizing phase information from signals that have been received via different antenna units). Parts of the signal processing may either take place in parallel units as shown in figure 14 or in one or more common units. The signal processing after digitizing is preferably effectuated in a common processor. A held-together signal processing is, in fact, demanded first when producing the angular information, i.e. the information that the lobe processor 1416 generates. Parts of the signal processing may also be performed in reverse order.

The invention is not restricted to the embodiments described with reference to the figures, but may be varied freely within the scope of the subsequent claims.

Particularly, the invention is not restricted to embodiments where a common antenna / vibrating element is employed both for transmission of probing signals and reception of probing signals, however separate antennae may equally well be utilized for transmission and reception respectively.

The invention is not either restricted to embodiments where the received information carrying signal is processed in a separate down converter 206 respective a separate quadrature demodulator 212, however demodulation of the information carrying signal into at least one secondary demodulated signal component may in some cases be performed in an integrated unit. Correspondingly, the down converter 207 and the quadrature demodulator 211 may be integrated into a common unit.

**Claims**

1. A method for remote distance measurement of signal reflecting objects in relation to a signal transceiver (200) comprising:

transmitting a probing signal (E) which is based on a first signal ($x_1$) being repeated with a certain regularity,

receiving an information carrying signal (e), which constitutes a reflected version of the transmitted probing signal (E) having been reflected against at least one reflecting object,

generating a primary signal ($P_1(x_1)$) on basis of the first signal ($x_1$).

generating a secondary signal ($P_2$) on basis of the information carrying signal (e), and

signal processing the primary signal ($P_1(x_1)$) and the secondary signal ($P_2(x_1, x_2)$), whereby at least one of a distance (Y(t)) and a relative velocity (V(t)) to the at least one reflecting object is determined, **characterized by** adding a noise signal ($x_2$) to one of the transmitted probing signal (E) and the information carrying signal (e), such that the secondary signal ($P_2(x_1, x_2)$) includes a signal component based on the first signal ($x_1$) as well as a signal component based on the noise signal ($x_2$) wherein the signal processing involves:

quadrature demodulating the primary signal ($P_1(x_1)$) to obtain primary demodulated signal components ($R_I$, $R_Q$), and

quadrature demodulating the secondary signal ($P_2(x_1, x_2)$) to obtain secondary demodulated signal components ($S_I$, $S_Q$)

digitizing the primary demodulated signal components ($R_I$, $R_Q$) into primary digital signal components ($D_{11}$, $D_{1Q}$), and

digitizing the secondary demodulated signal components ($S_I$, $S_Q$) into secondary digital signal components ($D_{2I}$, $D_{2Q}$).

correlating between primary digital signal components ($D_{11}$, $D_{1Q}$) and secondary digital signal components ($D_{2I}$, $D_{2Q}$), whereby a correlation signal ($R_c(T_R,t)$) is generated, and

processing the correlation signal ($R_c(T_R,t)$), whereby distance information (Y(t)) related to the at least one reflecting object is generated and

wherein the digitizing of the primary and secondary demodulated signal components is performed at a low resolution with respect to the amplitude information in the primary signal ($P_1(x_1)$) and the secondary signal ($P_2(x_1, x_2)$), respectively.

2. A method according to claim 1, **characterized by** the signal processing involving Doppler processing of the correlation signal ($R_c(T_R,t)$), whereby velocity information (V(t)) related to the at least one reflecting object is generated.

3. A method according to claim 2, **characterized by** the Doppler processing involving fast Fourier transforming.

4. A method according to claim 2, **characterized by** the Doppler processing involving binary Hadamard transforming.

5. A method according to claim 1, **characterized by** the digitizing involving binary A/D-conversion.

6. A method according to any one of the preceding claims, **characterized by** the transmitted probing signal (E) including a linear frequency sweep.

7. A method according to any one of the claims 1, 2 or 5, **characterized by** the transmitted probing signal (E) including a continuously frequency modulated signal.

8. A method according to any one of the claims 1, 2 or 5, **characterized by** the transmitted probing signal (E) including a step-frequency.

9. A method according to any one of the preceding claims, **characterized by** the transmitted probing signal (E) being pulse shaped.

10. A method according to any one of the preceding claims, **characterized by** generating the distance information (Y(t)) by

systematically shifting the secondary digital signal components ($D_{2I}$, $D_{2Q}$) in relation to the primary digital signal components ($D_{1I}$, $D_{1Q}$), and

calculating a correlation value for each respective shifting.

11. A method according to claim 10, **characterized by** the shifting of the secondary digital signal components ($D_{2I}$, $D_{2Q}$) being performed in certain steps, where each step corresponds to a distance slot.

12. A method according to any one of the preceding claims, **characterized by** the probing signal (E) being a radar signal.

13. A method according to any one of the claims 1 - 11, **characterized by** the probing signal (E) being a sonar signal.

14. A signal transceiver (200) for remote distance measurement of signal reflecting objects comprising a transmitter (220) for transmitting a probing signal (E) based on a first signal ($x_1$), which is repeated with a certain regularity, and a receiver (201) for receiving an information carrying signal (e) having been transmitted from the transmitter (220) and been reflected by at least one reflecting object, the receiver (201) in turn comprising:

first signal generating means (202, 203; 207) for receiving the first signal ($x_1$) and based thereon generating a primary signal ($P_1(x_1)$),
second signal generating means (202, 206, 209, 210a, 210b) for receiving the information carrying signal (e) and based thereon generating a secondary signal ($P_2(x_1, x_2)$), and
signal processing means (230, 240, 215; 216) for receiving the primary signal ($P_1(x_1)$) and the secondary signal ($P_2(x_1, x_2)$) and based thereon generating at least one of distance information (Y(t)) and relative velocity information (V(t)) pertaining to the at least one reflecting object, **characterized in that**

- the signal transceiver (200) comprises adding means (209, 210a, 210b) for adding a noise signal ($x_2$) to one of the transmitted probing signal (E) and the information carrying signal (e), such that the secondary signal ($P_2(x_1, x_2)$) includes a signal component based on the first signal ($x_1$) as well as a signal component based on the noise signal ($x_2$)
- the receiver (201) comprises

at least one demodulator (230; 211, 212) for receiving the primary signal ($P_1(x_1)$) and the secondary signal ($P_2(x_1, x_2)$) and based thereon generating at least one primary demodulated signal component ($R_I$, $R_Q$) and at least one secondary demodulated signal component ($S_I$, $S_Q$), respectively, and
at least one digitizing unit (240; 213, 214) for receiving the at least one primary demodulated signal component ($R_I$, $R_Q$) and the at least one secondary demodulated signal component ($S_I$, $S_Q$) and based thereon generating at least one primary digital signal component ($D_{1I}$, $D_{1Q}$) and at least one secondary digital signal component ($D_{2I}$, $D_{2Q}$), respectively, and
a correlator (215) for receiving the at least one primary digital signal component ($D_{1I}$, $D_{1Q}$) and the at least one secondary digital signal component ($D_{2I}$, $D_{2Q}$) and generating a correlation signal ($R_c(T_R,t)$) on the basis of the at least one primary digital signal component ($D_{1I}$, $D_{1Q}$) and the at least one secondary digital signal component ($D_{2I}$, D2Q)
wherein the at least one digitizing unit (240; 213, 214) has a low resolution with respect to the amplitude information in the primary signal ($P_1(x_1)$) and the secondary signal ($P_2(x_1, x_2)$), respectively.

15. A signal transceiver (200) according to claim 14, **characterized in that** the receiver (201) comprises a Doppler processor (216) for receiving the correlation signal ($R_c(T_R,t)$) and through processing of the same generating velocity information (V(t)) related to the at least one reflecting object.

16. A signal transceiver (200) according to claim 15 **characterized in that** the Doppler processor (216) is adapted to perform fast Fourier transforming.

17. A signal transceiver (200) according to claim 15, **characterized in that** the Doppler processor (216) is adapted to perform binary Hadamard transforming.

18. A signal transceiver (200) according to claim 15, **characterized in that** the correlator (215) is adapted to generate the correlation signal ($R_c(T_R,t)$) by correlating the at least one primary digital signal component ($D_{1I}$, $D_{1Q}$) with the at least one secondary digital signal component ($D_{2I}$, $D_{2Q}$).

19. A signal transceiver (200) according to any one of the claims 14, 15 or 18, **characterized in that** the transmitted probing signal (E) includes a linear frequency sweep.

20. A signal transceiver (200) according to any one of the claims 14, 15 or 18, **characterized in that** the transmitted probing signal (E) includes a continuously frequency modulated signal.

21. A signal transceiver (200) according to any one of the claims 14 - 16, **characterized in that** the transmitted probing signal (E) includes a step-frequency.

**22.** A signal transceiver (200) according to any one of the claims 14 - 16, **characterized in that** the transmitted probing signal (E) is pulse shaped.

**23.** A signal transceiver (200) according to any one of the claims 14 - 22, **characterized in that** it is included into a target seeker system.

**24.** A signal transceiver (200) according to any one of the claims 14 - 23, **characterized in that** the probing signal (E) is a sonar signal.

**25.** A signal transceiver (200) according to any one of the claims 14 - 23, **characterized in that** the probing signal (E) is a radar signal.

**26.** A signal transceiver (200) according to claim 25, **characterized in that** it is included into a reconnaissance radar system.

**27.** A signal transceiver (200) according to claim 25, **characterized in that** it is included into a fire-control radar system.

**28.** A signal transceiver (200) according to claim 14, **characterized in that** the at least one digitizing unit (240; 213, 214) comprises at least one binary A/D-converter.

**29.** A digital group antenna system (1400) comprising an antenna aperture (1405), **characterized in that**
the antenna aperture (1405) comprises at least two antenna units (205a-205f) which are connected to a respective signal transceiver (200a-200f) according to any one of the claims 14 - 28 and that the at least two antenna units (205a-205f) are distributed over the antenna aperture (1405), and
the group antenna system (1400) comprising a lobe processor (1416) for receiving data ($D_a$-$D_f$) from each of the signal transceivers (200a-200f) and through processing of the data ($D_a$-$D_f$) generate distance information (Y(t)), velocity information (V(t)) and angular information ($\Phi_n(t)$, $\Phi_m(t)$) related to signal reflecting objects.

**30.** A digital group antenna system according to claim 29, **characterized in that** the at least two antenna units (205a-205f) are positioned in the antenna aperture (1405) according to a check pattern and at equidistant distances ($d_m$, $d_n$) from each other.

**Patentansprüche**

**1.** Verfahren für die Fernabstandsmessung von signalreflektierenden Gegenständen in Bezug auf einen Signalsendeempfänger (200), umfassend:

Senden eines Sondensignals (E), das auf einem ersten Signal ($x_1$) basiert, das mit einer bestimmten Regelmäßigkeit wiederholt wird,
Empfangen eines Informationsträgersignals (e), das eine reflektierte Version des gesendeten Sondensignals (E) bildet, das von wenigstens einem Reflexionsgegenstand reflektiert wurde,
Erzeugen eines Primärsignals ($P_1(x_1)$) auf der Basis des ersten Signals ($x_1$),
Erzeugen eines Sekundärsignals ($P_2$) auf der Basis des Informationsträgersignals (e) und
Signalverarbeiten des Primärsignals ($P_1(x_1)$) und des Sekundärsignals ($P_2(x_1, x_2)$), wobei ein Abstand (Y(t)) und/oder eine Relativgeschwindigkeit (V(t)) zu dem wenigstens einen Reflexionsgegenstand bestimmt wird/werden, **gekennzeichnet durch** Hinzufügen eines Rauschsignals ($x_2$) zu dem gesendeten Sondensignal (E) und dem Informationsträgersignal (e), so dass das Sekundärsignal ($P_2(x_1, *x_2)$ eine Signalkomponente basierend auf dem ersten Signal ($x_1$) wie auch eine Signalkomponente basierend auf dem Rauschsignal ($x_2$) umfasst, und die Signalverarbeitung beinhaltet:

Quadraturdemodulieren des Primärsignals ($P_1(x_1)$, um primäre demodulierte Signalkomponenten ($R_I$, $R_Q$) zu erhalten, und
Quadraturdemodulieren des Sekundärsignals ($P_2(x_1, x_2)$, um sekundäre demodulierte Signalkomponenten ($S_I$, $S_Q$) zu erhalten,

Digitalisieren der primären demodulierten Signalkomponenten ($R_I$, $R_Q$) zu primären digitalen Signalkomponenten ($D_{1I}$, $D_{1Q}$), und

Digitalisieren der sekundären demodulierten Signalkomponenten ($S_I$, $S_Q$) zu sekundären digitalen Signalkomponenten ($D_{2I}$, $D_{2Q}$),

Herstellen einer Korrelation zwischen den primären digitalen Signalkomponenten ($D_{1I}$, $D_{1Q}$) und den sekundären digitalen Signalkomponenten ($D_{2I}$, $D_{2Q}$), wodurch ein Korrelationssignal ($R_c(T_R,t)$) erzeugt wird, und

Verarbeiten des Korrelationssignals ($R_c(T_R,t)$, wodurch Abstandsinformationen ($Y(t)$) erzeugt werden, die sich auf den wenigstens einen reflektierenden Gegenstand beziehen, und

das Digitalisieren der primären und sekundären demodulierten Signalkomponenten bei einer geringen Auflösung in Bezug auf die Amplitudeninformationen in dem Primärsignal ($P_1(x_1)$) bzw. dem Sekundärsignal ($P_2(x_1, x_2)$ ausgeführt wird.

2. Verfahren nach Anspruch 1, **dadurch gekennzeichnet, dass** die Signalverarbeitung eine Doppler-Verarbeitung des Korrelationssignals ($R_c(T_R,t)$) umfasst, wodurch Geschwindigkeitsinformationen ($V(t)$) erzeugt werden, die sich auf den wenigstens einen reflektierenden Gegenstand beziehen.

3. Verfahren nach Anspruch 2, **dadurch gekennzeichnet, dass** die Doppler-Verarbeitung eine schnelle Fourier-Transformation beinhaltet.

4. Verfahren nach Anspruch 2, **dadurch gekennzeichnet, dass** die Doppler-Verarbeitung eine binäre Hadamard-Transformation beinhaltet.

5. Verfahren nach Anspruch 1, **dadurch gekennzeichnet, dass** das Digitalisieren eine binäre A/D-Umwandlung beinhaltet.

6. Verfahren nach einem der vorhergehenden Ansprüche, **dadurch gekennzeichnet, dass** das gesendete Sondensignal (E) einen linearen Frequenzgang hat.

7. Verfahren nach einem der Ansprüche 1, 2 oder 5, **dadurch gekennzeichnet, dass** das gesendete Sondensignal (E) ein kontinuierlich frequenzmoduliertes Signal umfasst.

8. Verfahren nach einem der Ansprüche 1, 2 oder 5, **dadurch gekennzeichnet, dass** das gesendete Sondensignal (E) eine Stufenfrequenz hat.

9. Verfahren nach einem der vorhergehenden Ansprüche, **dadurch gekennzeichnet, dass** das gesendete Sondensignal (E) impulsförmig ist.

10. Verfahren nach einem der vorhergehenden Ansprüche, **dadurch gekennzeichnet, dass** die Abstandsinformationen ($Y(t)$) erzeugt werden durch

systematisches Verschieben der sekundären Signalkomponenten ($D_{2I}$, $D_{2Q}$) in Bezug auf die primären digitalen Signalkomponenten ($D_{1I}$, $D_{1Q}$) und

Berechnen eines Korrelationswertes für jede entsprechende Verschiebung.

11. Verfahren nach Anspruch 10, **dadurch gekennzeichnet, dass** das Verschieben der sekundären digitalen Signalkomponenten ($D_{2I}$, $D_{2Q}$) in bestimmten Schritten ausgeführt wird, wobei jeder Schritt einem Abstandsschlitz entspricht.

12. Verfahren nach einem der vorhergehenden Ansprüche, **dadurch gekennzeichnet, dass** das Sondensignal (E) ein Radarsignal ist.

13. Verfahren nach einem der Ansprüche 1 bis 11, **dadurch gekennzeichnet, dass** das Sondensignal (E) ein Sonarsignal ist.

14. Signalsendeempfänger (200) für die Fernabstandsmessung von signalreflektierenden Gegenständen, umfassend einen Sender (220) zum Senden eines Sondensignals (E) auf der Basis eines ersten Signals ($x_1$), das mit einer bestimmten Regelmäßigkeit wiederholt wird, und einen Empfänger (201) zum Empfangen eines Informationsträgersignals (e), das von dem Sender (220) gesendet und von wenigstens einem reflektierenden Gegenstand reflektiert wurde, wobei der Empfänger (201) seinerseits umfasst:

erste Signalerzeugungseinrichtungen (202, 203; 207) zum Empfangen des ersten Signals ($x_1$) und Erzeugen

eines Primärsignals ($P_1(x_1)$) auf dessen Basis,
zweite Signalerzeugungseinrichtungen (202, 206, 209, 210a, 210b) zum Empfangen des Informationsträgersignals (e) und Erzeugen eines Sekundärsignals ($P_2(x_1, x_2)$) auf dessen Basis und
Signalverarbeitungseinrichtungen (230, 240, 215; 216) zum Empfangen des Primärsignals ($P_1(x_1)$) und des Sekundärsignals ($P_2(x_1, x_2)$) und Erzeugen von Abstandsinformationen (Y(t)) und/oder Relativgeschwindigkeitsinformationen (V(t)), die sich auf den wenigstens einen reflektierenden Gegenstand beziehen, auf deren Basis, **dadurch gekennzeichnet, dass**
der Signalsendeempfänger (200) Addiereinrichtungen (209, 210a, 210b) umfasst, um ein Rauschsignal ($x_2$) zu dem gesendeten Sondensignal (E) oder dem Informationsträgersignal (e) hinzuzufügen, so dass das Sekundärsignal ($P_2(x_1, x_2)$) eine Signalkomponente auf der Basis des ersten Signals ($x_1$) wie auch eine Signalkomponente auf der Basis des Rauschsignals ($x_2$) umfasst,
und der Empfänger (201) umfasst:

wenigstens einen Demodulator (230; 211, 212) zum Empfangen des Primärsignals ($P_1(x_1)$) und des Sekundärsignals ($P_2(x_1, x_2)$) und Erzeugen wenigstens einer primären demodulierten Signalkomponente ($R_I$, $R_Q$) bzw. wenigstens einer sekundären demodulierten Signalkomponente ($S_I$, $S_Q$) auf deren Basis und
wenigstens eine Digitalisiereinheit (240; 213, 214) zum Empfangen der wenigstens einen primären demodulierten Signalkomponente ($R_I$, $R_Q$) und der wenigstens einen sekundären demodulierten Signalkomponente ($S_I$, $S_Q$) und Erzeugen wenigstens einer primären digitalen Signalkomponente ($D_{1I}$, $D_{1Q}$) bzw. wenigstens einer sekundären digitalen Signalkomponente ($D_{2I}$, $D_{2Q}$) auf deren Basis und
eine Korrelationseinrichtung (215) zum Empfangen der wenigstens einen primären digitalen Signalkomponente ($D_{1I}$, $D_{1Q}$) und der wenigstens einen sekundären digitalen Signalkomponente ($D_{2I}$, $D_{2Q}$) sowie Erzeugen eines Korrelationssignals ($R_c(T_R,t)$ auf der Basis der wenigstens einen primären Signalkomponente ($D_{1I}$, $D_{1Q}$) und der wenigstens einen sekundären digitalen Signalkomponente ($D_{2I}$, $D_{2Q}$),
wobei die wenigstens eine Digitalisiereinheit (240; 213, 214) eine geringe Auflösung in Bezug auf die Amplitudeninformationen in dem Primärsignal ($P_1(x_1)$) bzw. dem Sekundärsignal ($P_2(x_1, x_2)$) hat.

15. Signalsendeempfänger (200) nach Anspruch 14, **dadurch gekennzeichnet, dass** der Empfänger (201) einen Doppler-Prozessor (216) zum Empfangen des Korrelationssignals ($R_c(T_R,t)$) umfasst und durch Verarbeiten desselben Geschwindigkeitsinformationen (V(t)) erzeugt, die sich auf den wenigstens einen reflektierenden Gegenstand beziehen.

16. Signalsendeempfänger (200) nach Anspruch 15, **dadurch gekennzeichnet, dass** der Doppler-Prozessor (216) dazu eingerichtet ist, eine schnelle Fourier-Transformation auszuführen.

17. Signalsendeempfänger (200) nach Anspruch 15, **dadurch gekennzeichnet, dass** der Doppler-Prozessor (216) dazu eingerichtet ist, eine binäre Hadamard-Transformation auszuführen.

18. Signalsendeempfänger (200) nach Anspruch 15, **dadurch gekennzeichnet, dass** die Korrelationseinrichtung (215) dazu eingerichtet ist, das Korrelationssignal ($R_c(T_R,t)$) durch Korrelieren der wenigstens einen primären digitalen Signalkomponente ($D_{1I}$, $D_{1Q}$) mit der wenigstens einen sekundären digitalen Signalkomponente ($D_{2I}$, $D_{2Q}$) zu erzeugen.

19. Signalsendeempfänger (200) nach einem der Ansprüche 14, 15 oder 18, **dadurch gekennzeichnet, dass** das gesendete Sondensignal (E) einen linearen Frequenzverlauf umfasst.

20. Signalsendeempfänger (200) nach einem der Ansprüche 14, 15 oder 18, **dadurch gekennzeichnet, dass** das gesendete Sondensignal (E) ein kontinuierlich frequenzmoduliertes Signal umfasst.

21. Signalsendeempfänger (200) nach einem der Ansprüche 14 bis 16, **dadurch gekennzeichnet, dass** das gesendete Sondensignal (E) eine Stufenfrequenz umfasst.

22. Signalsendeempfänger (200) nach einem der Ansprüche 14 bis 16, **dadurch gekennzeichnet, dass** das gesendete Sondensignal (E) impulsförmig ist.

23. Signalsendeempfänger (200) nach einem der Ansprüche 14 bis 22, **dadurch gekennzeichnet, dass** er in einem Zielsuchsystem enthalten ist.

**24.** Signalsendeempfänger (200) nach einem der Ansprüche 14 bis 23, **dadurch gekennzeichnet, dass** das Sondensignal (E) ein Sonarsignal ist.

**25.** Signalsendeempfänger (200) nach einem der Ansprüche 14 bis 23, **dadurch gekennzeichnet, dass** das Sondensignal (E) ein Radarsignal ist.

**26.** Signalsendeempfänger (200) nach Anspruch 25, **dadurch gekennzeichnet, dass** er in einem Wiedererkennungsradarsystem enthalten ist.

**27.** Signalsendeempfänger (200) nach Anspruch 25, **dadurch gekennzeichnet, dass** er in einem Feuerschutzradarsystem enthalten ist.

**28.** Signalsendeempfänger (200) nach Anspruch 14, **dadurch gekennzeichnet, dass** die wenigstens eine Digitalisiereinheit (240; 213, 214) wenigstens einen binären A/D-Wandler umfasst.

**29.** Digitales Gruppenantennensystem (1400) umfassend eine Antennenapertur (1405), **dadurch gekennzeichnet, dass**
die Antennenapertur (1405) wenigstens zwei Antenneneinheiten (205a-205f) umfasst, die mit einem entsprechenden Signalsendeempfänger (200a-200f) gemäß einem der Ansprüche 14 bis 28 verbunden sind, und dass die wenigstens zwei Antenneneinheiten (205a-205f) über die Antennenapertur (1405) verteilt sind, und
das Gruppenantennensystem (1400) einen Keulenprozessor (1416) zum Empfangen von Daten ($D_a$-$D_f$) von jedem der Signalsendeempfänger (200a-200f) umfasst und durch Verarbeiten der Daten ($D_a$-$D_f$) Abstandsinformationen (Y(t)), Geschwindigkeitsinformationen (V(t)) und Winkelinformationen ($\Phi_n$(t), $\Phi_m$(t)) erzeugt, die sich auf die signalreflektierenden Gegenstände beziehen.

**30.** Digitales Gruppenantennensystem nach Anspruch 29, **dadurch gekennzeichnet, dass** die wenigstens zwei Antenneneinheiten (205a-205f) in der Antennenapertur (1405) gemäß einem Prüfmuster und in äquidistanten Abständen ($d_m$, $d_n$) voneinander angeordnet sind.

**Revendications**

**1.** Procédé de télémesure de distance d'objets réfléchissant un signal par rapport à un émetteur-récepteur de signal (200) comprenant :

l'émission d'un signal de sondage (E) qui est basé sur un premier signal ($x_1$) répété avec une certaine régularité ;
la réception d'un signal portant des informations (e), qui constitue une version réfléchie du signal de sondage émis (E) ayant été réfléchi par au moins un objet réfléchissant ;
la génération d'un signal primaire ($P_1$($x_1$)) sur la base du premier signal ($x_1$) ;
la génération d'un signal secondaire ($P_2$) sur la base du signal portant des informations (e) ; et
l'exécution d'un traitement de signal du signal primaire ($P_1$($x_1$)) et du signal secondaire ($P_2$($x_1$, $x_2$)), grâce à quoi l'une au moins d'une distance (Y(t)) et d'une vitesse relative (V(t)) par rapport à le au moins un objet réfléchissant est déterminée, **caractérisé par** l'ajout d'un signal de bruit ($x_2$) à l'un du signal de sondage émis (E) et du signal portant des informations (e), de sorte que le signal secondaire ($P_2$($x_1$, $x_2$)) comprenne une composante de signal basée sur le premier signal ($x_1$) ainsi qu'une composante de signal basée sur le signal de bruit ($x_2$), dans lequel le traitement de signal comprend :

la démodulation en quadrature du signal primaire ($P_1$($x_1$)) pour obtenir des composantes de signal démodulé primaire ($R_I$, $R_Q$); et
la démodulation en quadrature du signal secondaire $P_2$($x_1$, $x_2$)) pour obtenir des composantes de signal démodulé secondaire ($S_I$, $S_Q$) ;

la numérisation des composantes de signal démodulé primaire ($R_I$, $R_Q$) en composantes de signal numérique primaire ($D_{1I}$, $D_{1Q}$) ; et
la numérisation des composantes de signal démodulé secondaire ($S_I$, $S_Q$) en composantes de signal numérique secondaire ($D_{2I}$, $D_{2Q}$) ;
l'exécution d'une corrélation entre les composantes de signal numérique primaire ($D_{1I}$, $D_{1Q}$) et les composantes de signal numérique secondaire ($D_{2I}$, $D_{2Q}$), grâce à quoi un signal de corrélation ($R_c$($T_R$, t)) est généré ; et

le traitement de signal de corrélation ($R_c(T_R, t)$), grâce à quoi des informations de distance (Y(t)) se rapportant à le au moins un objet réfléchissant sont générées ; et

dans lequel la numérisation des composantes des signaux démodulés primaire et secondaire est exécutée à faible résolution en ce qui concerne les informations d'amplitude du signal primaire ($P_1(x_1)$) et du signal secondaire $P_2(x_1, x_2)$), respectivement.

2. Procédé selon la revendication 1, **caractérisé en ce que** le traitement de signal implique un traitement Doppler du signal de corrélation ($R_c(T_R, t)$), grâce à quoi des informations de vitesse (V(t)) se rapportant à le au moins un objet réfléchissant sont générées.

3. Procédé selon la revendication 2, **caractérisé en ce que** le traitement Doppler implique une transformation de Fourier rapide.

4. Procédé selon la revendication 2, **caractérisé en ce que** le traitement Doppler implique une transformation de Hadamard binaire.

5. Procédé selon la revendication 1, **caractérisé en ce que** la numérisation implique une conversion A/N binaire.

6. Procédé selon l'une quelconque des revendications précédentes, **caractérisé en ce que** le signal de sondage émis (E) comprend un balayage de fréquence linéaire.

7. Procédé selon l'une quelconque des revendications 1, 2 ou 5, **caractérisé en ce que** le signal de sondage émis (E) comprend un signal modulé en fréquence de manière continue.

8. Procédé selon l'une quelconque des revendications 1, 2 ou 5, **caractérisé en ce que** le signal de sondage émis (E) comprend une fréquence par pas.

9. Procédé selon l'une quelconque des revendications précédentes, **caractérisé en ce que** le signal de sondage émis (E) présente une forme impulsionnelle.

10. Procédé selon l'une quelconque des revendications précédentes, **caractérisé en ce que** la génération des informations de distance (Y(t)) consiste à :

décaler de manière systématique les composantes de signal numérique secondaire ($D_{2I}$, $D_{2Q}$) par rapport aux composantes de signal numérique primaire ($D_{1I}$, $D_{1Q}$) ; et
calculer une valeur de corrélation pour chaque décalage respectif.

11. Procédé selon la revendication 10, **caractérisé en ce que** le décalage des composantes de signal numérique secondaire ($D_{2I}$, $D_{2Q}$) est exécuté selon certains pas, chaque pas correspondant à une fente de distance.

12. Procédé selon l'une quelconque des revendications précédentes, **caractérisé en ce que** le signal de sondage (E) est un signal radar.

13. Procédé selon l'une quelconque des revendications 1 à 11, **caractérisé en ce que** le signal de sondage (E) est un signal sonar.

14. Émetteur-récepteur de signal (200) de télémesure de distance d'objets réfléchissant un signal, comprenant un émetteur (220) destiné à émettre un signal de sondage (E) basé sur un premier signal ($x_1$), qui est répété avec une certaine régularité, et un récepteur (201) destiné à recevoir un signal portant des informations (e) qui a été émis par l'émetteur (220) et réfléchi par au moins un objet réfléchissant, le récepteur (201) comprenant à son tour :

des premiers moyens de génération de signal (202, 203 ; 207) pour recevoir le premier signal ($x_1$) et sur la base de ceci, générer un signal primaire ($P_1(x_1)$);
des seconds moyens de génération de signal (202, 206, 209, 210a, 210b) pour recevoir le signal portant des informations (e) et sur la base de ceci, générer un signal secondaire $P_2(x_1, x_2)$); et
des moyens de traitement de signal (230, 240, 215 ; 216) pour recevoir le signal primaire ($P_1(x_1)$) et le signal secondaire $P_2(x_1, x_2)$) et sur la base de ceci, générer l'une au moins des informations de distance (Y(t)) et des informations de vitesse relative (V(t)) se rapportant à le au moins un objet réfléchissant, **caractérisé en ce que** :

- l'émetteur-récepteur de signal (200) comprend des moyens de sommation (209, 210a, 210b) pour ajouter un signal de bruit ($x_2$) à l'un du signal de sondage émis (E) et du signal portant des informations (e), de sorte que le signal secondaire $P_2(x_1, x_2)$) comprenne une composante de signal basée sur le premier signal ($x_1$) ainsi qu'une composante de signal basée sur le signal de bruit ($x_2$) ;

- le récepteur (201) comprend :

au moins un démodulateur (230 ; 211, 212) pour recevoir le signal primaire ($P_1(x_1)$) et le signal secondaire $P_2(x_1, x_2)$) et sur la base de ceci, générer au moins une composante de signal démodulé primaire ($R_I$, $R_Q$) et au moins une composante de signal démodulé secondaire ($S_I$, $S_Q$), respectivement ; et au moins une unité de numérisation (240 ; 213, 214) pour recevoir la au moins une composante de signal démodulé primaire ($R_I$, $R_Q$) et la au moins une composante de signal démodulé secondaire ($S_I$, $S_Q$), et sur la base de ceci, générer au moins une composante de signal numérique primaire ($D_{1I}$, $D_{1Q}$) et au moins une composante de signal numérique secondaire ($D_{2I}$, $D_{2Q}$), respectivement ; et un corrélateur (215) pour recevoir la au moins une composante de signal numérique primaire ($D_{1I}$, $D1_Q$) et la au moins une composante de signal numérique secondaire ($D_{2I}$, $D_{2Q}$), et générer un signal de corrélation ($R_c(T_R, t)$) sur la base de la au moins une composante de signal numérique primaire ($D_{1I}$, $D_{1Q}$) et de la au moins une composante de signal numérique secondaire ($D_{2I}$, $D_{2Q}$) ;

dans lequel la au moins une unité de numérisation (240 ; 213, 214) présente une faible résolution en ce qui concerne les informations d'amplitude dans le signal primaire ($P_1(x_1)$) et dans le signal secondaire $P_2(x_1, x_2)$), respectivement.

**15.** Émetteur-récepteur de signal (200) selon la revendication 14, **caractérisé en ce que** le récepteur (201) comprend un processeur Doppler (216) destiné à recevoir le signal de corrélation ($R_c(T_R, t)$) et, grâce au traitement de celui-ci, à générer des informations de vitesse (V(t)) se rapportant à le au moins un objet réfléchissant.

**16.** Émetteur-récepteur de signal (200) selon la revendication 15, **caractérisé en ce que** le processeur Doppler (216) est adapté pour exécuter une transformation de Fourier rapide.

**17.** Émetteur-récepteur de signal (200) selon la revendication 15, **caractérisé en ce que** le processeur Doppler (216) est adapté pour exécuter une transformation de Hadamard binaire.

**18.** Émetteur-récepteur de signal (200) selon la revendication 15, **caractérisé en ce que** le corrélateur (215) est adapté pour générer le signal de corrélation ($R_c(T_R, t)$) en corrélant la au moins une composante de signal numérique primaire ($D_{1I}$, $D_{1Q}$) avec la au moins une composante de signal numérique secondaire ($D_{2I}$, $D_{2Q}$).

**19.** Émetteur-récepteur de signal (200) selon l'une quelconque des revendications 14, 15 ou 18, **caractérisé en ce que** le signal de sondage émis (E) comprend un balayage de fréquence linéaire.

**20.** Émetteur-récepteur de signal (200) selon l'une quelconque des revendications 14, 15 ou 18, **caractérisé en ce que** le signal de sondage émis (E) comprend un signal modulé en fréquence de manière continue.

**21.** Émetteur-récepteur de signal (200) selon l'une quelconque des revendications 14 à 16, **caractérisé en ce que** le signal de sondage émis (E) comprend une fréquence par pas.

**22.** Émetteur-récepteur de signal (200) selon l'une quelconque des revendications 14 à 16, **caractérisé en ce que** le signal de sondage émis (E) présente une forme impulsionnelle.

**23.** Émetteur-récepteur de signal (200) selon l'une quelconque des revendications 14 à 22, **caractérisé en ce qu'**il est inclus dans un système de recherche de cible.

**24.** Émetteur-récepteur de signal (200) selon l'une quelconque des revendications 14 à 23, **caractérisé en ce que** le signal de sondage (E) est un signal sonar.

**25.** Émetteur-récepteur de signal (200) selon l'une quelconque des revendications 14 à 23, **caractérisé en ce que** le signal de sondage (E) est un signal radar.

**26.** Émetteur-récepteur de signal (200) selon la revendication 25, **caractérisé en ce qu'**il est inclus dans un système de radar de reconnaissance.

27. Émetteur-récepteur de signal (200) selon la revendication 25, **caractérisé en ce qu'**il est inclus dans un système de radar de conduite de tir.

28. Émetteur-récepteur de signal (200) selon la revendication 14, **caractérisé en ce que** la au moins une unité de numérisation (240 ; 213, 214) comprend au moins un convertisseur A/N binaire.

29. Système d'antenne de groupe numérique (1400) comprenant une ouverture d'antenne (1405), **caractérisé en ce que** :

l'ouverture d'antenne (1405) comprend au moins deux unités d'antenne (205a-205f) qui sont connectées à un émetteur-récepteur de signal respectif (200a-200f) selon l'une quelconque des revendications 14 à 28, et **en ce que** les au moins deux unités d'antenne (205a-205f) sont réparties sur l'ouverture d'antenne (1405) ; et le système d'antenne de groupe (1400) comprend un processeur de lobe (1416) destiné à recevoir des données ($D_a$-$D_f$) en provenance de chacun des émetteurs récepteurs de signal (200a-200f) et, grâce au traitement des données ($D_a$-$D_f$), génère des informations de distance ($Y(t)$), des informations de vitesse ($V(t)$) et des informations angulaires ($\Phi_n(t)$, $\Phi_m(t)$) se rapportant aux objets réfléchissant un signal.

30. Système d'antenne de groupe numérique selon la revendication 29, **caractérisé en ce que** les au moins deux unités d'antenne (205a-205f) sont positionnées dans l'ouverture d'antenne (1405) selon un motif de contrôle et à des distances équidistantes ($d_m$, $d_n$) l'une de l'autre.

**Fig. 1**

**Fig. 13**

**Fig. 2**

EP 1 373 925 B1

Fig. 3

EP 1 373 925 B1

Fig. 4

Fig. 5

Fig. 6

Fig. 7

EP 1 373 925 B1

**Fig. 8**

EP 1 373 925 B1

**Fig. 9**

EP 1 373 925 B1

**Fig. 10**

Fig. 11

EP 1 373 925 B1

START

Generate a probing signal E based on
a first signal $x_1$ /—1201

Possibly add a noise signal $x_2$,
being uncorrelated with $x_1$, to the probing signal E /—1202

Transmit the probing signal E /—1203

Receive a reflected information carrying signal e /—1204

Was an $x_2$-component
added to E ? /—1205

Yes

No

Add $x_2$ to e /—1206

1207 —\ Generate a primary signal
$P_1(x_1)$ based on $x_1$

Generate a secondary
signal $P_2(x_1, x_2)$ based on e /—1208

Signal process $P_1(x_1)$ and $P_2(x_1, x_2)$ → distance
information Y(t) and/or velocity information V(t) related
to at least one reflecting object /—1209

**Fig. 12**

**Fig. 14**

EP 1 373 925 B1